(19) Europäisches Patentamt
European Patent Office
Office européen des brevets

(11) EP 3 883 022 A1

(12) EUROPEAN PATENT APPLICATION

(43) Date of publication:
22.09.2021 Bulletin 2021/38

(51) Int Cl.:
H01M 4/46 (2006.01)

(21) Application number: 20193586.3

(22) Date of filing: 31.08.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.03.2020 JP 2020048235
13.08.2020 JP 2020136835

(71) Applicant: KABUSHIKI KAISHA TOSHIBA
Minato-ku
Tokyo
105-0023 (JP)

(72) Inventors:
• Yoshima, Kazuomi
Tokyo, 105-0023 (JP)
• Matsuno, Shinsuke
Tokyo, 105-0023 (JP)
• Takami, Norio
Tokyo, 105-0023 (JP)

(74) Representative: Hoffmann Eitle
Patent- und Rechtsanwälte PartmbB
Arabellastraße 30
81925 München (DE)

(54) **ELECTRODE CURRENT COLLECTOR, ELECTRODE, SECONDARY BATTERY, BATTERY PACK, VEHICLE, AND STATIONARY POWER SUPPLY**

(57) An electrode current collector (60) according to one approach contains aluminum, and the electrode current collector (60) includes a metallic layer (61) and a porous layer (62) on one principal surface or on both principal surfaces of the metallic layer (61). The porous layer (62) includes plural pores (63) extending in a thickness direction of the porous layer (62). When ten positions of unit length R extending in a planar direction of the metallic layer (61) are set in a cross-section of the electrode current collector (60), a ratio between the R and an average value A of a number N per R of the pores (63) intersecting the R is 1 $\mu$m $\leq$ A/R $\leq$ 50 $\mu$m.

FIG. 1A

**Description**

FIELD

The present disclosure relates to an electrode current collector, an electrode, a secondary battery, a battery pack, a vehicle, and a stationary power supply.

BACKGROUND

Nonaqueous electrolyte batteries, in which a carbon material or a lithium-titanium oxide is used as a negative electrode active material and a layered oxide including nickel, cobalt, manganese, and the like is used as a positive electrode active material, secondary batteries in particular, have already been put to practical use as a power source in a wide range of fields. Modes of such nonaqueous electrolyte batteries span over far ranges from small-sized batteries for various electronic devices to large-sized batteries for electric automobiles and the like. In an electrolyte for such secondary batteries, unlike a nickel-hydrogen battery or a lead storage battery, used is a nonaqueous organic solvent, in which ethylene carbonate, methyl ethyl carbonate, and the like are mixed. The electrolyte using such a solvent has oxidation resistance and reduction resistance that are higher than those of an aqueous electrolyte, and thus electrolysis of the solvent hardly occurs. For that reason, the nonaqueous secondary battery can realize a high electromotive force of from 2 V to 4.5 V.

When a lithium manganese oxide is used as the positive electrode active material and a lithium titanium oxide such as $LiTi_2O_4$ or $Li_4Ti_5O_{12}$ is used as the negative electrode active material, an electromotive force of about 2.6 V to 2.7 V can be theoretically obtained, and thus the battery can be expected to be attractive in terms of the energy density. In a nonaqueous lithium ion battery employing such a combination of the positive and negative electrode materials, excellent life performance can be obtained, and such a battery has already been put into practical use. On the other hand, many of the organic solvents are flammable materials, and thus the safety of the nonaqueous secondary battery is apt to be inferior to the secondary battery using an aqueous solution, in principle. Although various measures are being taken to improve the safety of the secondary battery using the electrolyte of organic solvent base, such measures are not necessarily sufficient. Furthermore, for the nonaqueous secondary battery, a dry environment is necessary in the production process, and thus the production cost is consequently increased. In addition, the electrolyte of organic solvent base has inferior electro-conductivity, and thus the internal resistance of the nonaqueous secondary battery is apt to increase. These have been big issues in applications for an electric automobile and a hybrid electric automobile in which the battery safety and the battery cost are emphasized, and in an application for a large-sized storage battery for electricity storage.

In order to solve the problems of the nonaqueous secondary battery, a secondary battery using an aqueous electrolyte has been proposed. In an aqueous solution electrolyte, however, since a potential of lithium insertion and extraction for the lithium titanium oxide is about 1.5 V (vs. Li/Li$^+$) relative to a lithium reference potential, electrolysis of the aqueous solution electrolyte is apt to occur. In particular, at the negative electrode, hydrogen is vigorously generated by electrolysis occurring on a surface of a negative electrode current collector or a metal outer can electrically connected to the negative electrode, and thus the active material may become easily flaked off from the current collector due to the influence of the hydrogen generation. Therefore, the operation of such a secondary battery had not been stable, which has been problematic in performing satisfactory charge and discharge.

BRIEF DESCRIPTION OF THE DRAWINGS

FIG. 1A is a schematic cross-sectional view showing an electrode current collector according to a first approach;
FIG. 1B is a schematic cross-sectional view showing another electrode current collector according to the first approach;
FIG. 2 is a schematic view representing a method of measuring pores for the electrode current collector according to the first approach;
FIG. 3A is a schematic view showing an electrode according to a second approach;
FIG. 3B is a schematic view showing another electrode according to the second approach;
FIG. 4 is a partially cutout cross-sectional view schematically showing an example of a secondary battery according to a third approach;
FIG. 5 is a side view of the battery of FIG. 4;
FIG. 6 is a partially cutout perspective view schematically showing another example of the secondary battery according to the third approach;

FIG. 7 is an enlarged cross-sectional view of section A in FIG. 6;
FIG. 8 is a perspective view schematically showing an example of a battery module according to a fourth approach;
FIG. 9 is a perspective view schematically showing an example of a battery pack according to a fifth approach;
FIG. 10 is an exploded perspective view schematically showing another example of the battery pack according to the fifth approach;
FIG. 11 is a block diagram showing an electric circuit of the battery pack shown in FIG. 10;
FIG. 12 is a cross-sectional view schematically showing an example of a vehicle according to a sixth approach;
FIG. 13 is a diagram schematically showing another example of the vehicle according to the sixth approach; and
FIG. 14 is a block diagram showing an example of a system including a stationary power supply according to a seventh approach.

DETAILED DESCRIPTION

An electrode current collector according to one approach contains aluminum, and the electrode current collector includes a metallic layer and a porous layer on one principal surface or on both principal surfaces of the metallic layer. The porous layer includes plural pores extending in a thickness direction of the porous layer. When ten positions of unit length R extending in a planar direction of the metallic layer are set in a cross-section of the electrode current collector, a ratio between the R and an average value A of a number N per R of the pores intersecting the R is $1\ \mu m \leq A/R \leq 50\ \mu m$.

According to the above approach, provided is an electrode current collector that can realize a battery excellent in charge-discharge performance and cycle life performance.

Hereinafter, approaches will be described with reference to the drawings. Note that the same reference numerals are given to common configurations throughout the approaches, and redundant descriptions are omitted. In addition, each drawing is a schematic view for describing the approach and facilitating the understanding thereof, and there are some differences in shape, dimension, ratio, and the like from an actual device. These, however, may be changed as appropriate, considering the following description and known technology.

(First Approach)

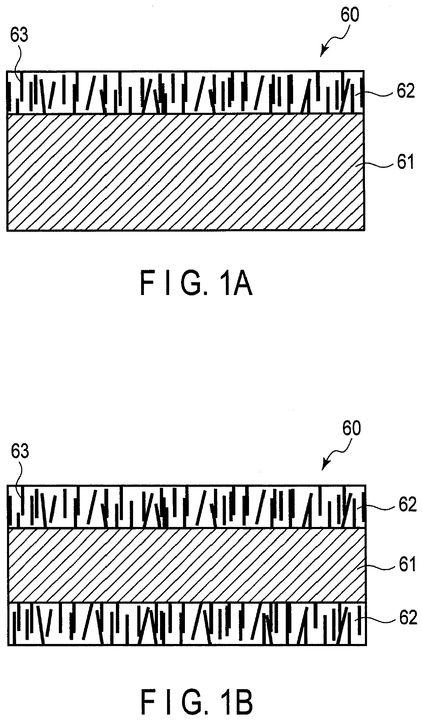

According to a first approach, an electrode current collector is provided. FIG. 1 is a cross-sectional schematic view showing an electrode current collector 60 according to the first approach. The electrode current collector 60 according to the first approach is an electrode current collector containing aluminum, and includes a metallic layer 61 and a porous layer 62 provided on one principal surface of the metallic layer 61. Since the current collector is an electrode current collector containing aluminum, the metallic layer 61 contains aluminum, and the porous layer 62 also contains aluminum. FIG. 1A illustrates a case where the porous layer 62 is provided on one principal surface of the metallic layer 61. FIG. 1B illustrates a case where porous layers 62 are provided on both principal surfaces of the metallic layer 61. Thus, the porous layers may be provided on only one principal surface or both principal surfaces of the metallic layer. Each porous layer 62 includes plural pores 63 extending in a thickness direction of the porous layer 62. The pores 63 may be present in parallel relative to the thickness direction of the porous layer 62, or along an oblique direction from the principal surface on the metallic layer side of the porous layer toward the principal surface on the opposite side. Including such cases, expressions like, the pores are present substantially in parallel with respect to the thickness direction of the porous layer, or the pores extend in the thickness direction of the porous layer are used herein, to describe such orientations of the pores 63. The pore 63 may penetrate the porous layer 62 from the surface of the porous layer 62 in contact with the metallic layer 61 through to the other surface, or may be joined to another pore to have a branched structure, such as a bifurcated one. The pores 63 included in the porous layer 62 can be measured in a SEM observation image of the cross-section of the current collector as observed by a scanning electron microscope (SEM). Specifically, in the SEM observation image, virtual regions are set by dividing the porous layer is equally into three in the thickness direction of the porous layer. In each virtual region, ten positions of unit length R ($\mu m$) extending in the planar direction of the metallic layer are set, and the number N of pores intersecting R is measured. The relationship between the R and the average value A of the numbers N of pores intersecting the R satisfies the following formula (1):

$$1\ \mu m^{-1} \leq A/R \leq 50\ \mu m^{-1} \quad (1)$$

Here, the unit length R may be, for example, 1 $\mu m$ or more. In addition, the aforementioned cross-section indicates a cross-section obtained by cutting the current collector along a thickness direction. For example, a cross-section that crosses an intersection between the metallic layer and the porous layer is observed.

The current collector according to the present approach may be used for a secondary battery using an aqueous electrolyte or a secondary battery using a nonaqueous electrolyte. In the case of usage for a secondary battery using a nonaqueous electrolyte, the electrode current collector containing aluminum may be capable of being used as a current collector for a high-voltage resistant positive electrode or a negative electrode using graphite, but the following description describes the case of usage for an aqueous electrolyte battery.

The electrode current collector according to the present approach may be simply referred to as "current collector". In addition, since an electrode provided with the electrode current collector can be used in a battery, the current collector can also be considered as being a battery current collector.

In the secondary battery using the aqueous electrolyte, when hydrogen is generated at the negative electrode, a charge-discharge efficiency of the negative electrode decreases in comparison to that of the positive electrode. Therefore, when the charge-and-discharge cycle is repeated, the positive electrode is gradually brought to an overcharged state. As a result, the positive electrode deteriorates earlier, rendering it difficult to operate as a secondary battery. In general, when an electrode active material layer is provided directly on the current collector, at least part of the electrode active material layer is easily dislodged off from the current collector due to gas generation associated with water electrolysis on the current collector surface accompanying charge and discharge. If at least part of the electrode active material layer is displaced off from the current collector, electronic conductive paths in the electrode are decreased; thus, the electrical resistance increases or the current collection becomes difficult, resulting in capacity deterioration.

If a sole aluminum metal or an alloy containing aluminum is used for the current collector, hydrogen is easily generated due to low hydrogen overvoltage. Thus, in order to suppress water electrolysis, aluminum surface treatment maybe performed. In a case, for example, where alumite treatment is performed to form an alumina layer as surface treatment, when a coating sufficient to suppress water electrolysis is prepared, the resistance may become too high, rendering charging and discharging difficult. Furthermore, when the alumina layer is increased on the surface of the current collector, the strength may be significantly lowered. If the formula (1) is satisfied as with the electrode current collector according to the present approach, resistance can be suppressed while being sufficient for water electrolysis suppression, and the charge-discharge efficiency can therefore be enhanced.

To be specific, the porous layer included in the electrode current collector according to the present approach is a non-conductive member formed by oxidation of the surface of the current collector. That is, the metallic layer of the current collector is covered with the porous layer. This non-conductive member is, for example, alumina ($Al_2O_3$). This coating by the non-conductive member formed by oxidation of the surface of the current collector does not prevent electrical conduction between the metallic layer of the current collector and the electrode active material layer. This is because the porous layer present on the surface of the metallic layer has pores and the aqueous electrolyte can therefore enter into the interior of the pores. By having the aqueous electrolyte enter inside the pores, the distance of electronic conduction through the non-conductive member can be shorter. Therefore, even with the current collector including the porous layer that is a non-conductive member, the electronic conductivity can be maintained.

In addition, because the porous layer includes the pores, part of the electrode active material layer can enter into the pores of the porous layer. As a result, the electrode active material layer is not easily dislodged from the porous layer, and direct electronic conduction between the electrode active material layer and the metallic layer included in the current collector is possible. A non-conductive member coating having no pores is unable to achieve the effect of improving the peel strength through part of the electrode active material layer entering into the pores of the porous layer, or the effect of securing a direct electrical conductive path between the electrode active material layer and the metallic layer included in the current collector.

In the electrode current collector according to the present approach, by virtue of the ratio A/R satisfying $1 \leq A/R \leq 50$, the amount of the aqueous electrolyte present inside the pores can be adjusted. That is, when the ratio A/R satisfies $1 \leq A/R \leq 50$, it is possible to reduce the amount of the aqueous electrolyte present inside the pores in an adequate manner while maintaining the electronic conductivity, rendering it possible to suppress water electrolysis. Thereby, the electrode active material layer can be prevented from becoming dislodged from the current collector surface due to gas generation. Therefore, even if the secondary battery including the electrode provided with the electrode current collector according to the first approach repeats charging and discharging, it is possible to suppress the increase of electrical resistance associated with the dislodging of the electrode active material layer; thus, excellent charge-discharge efficiency and cycle life performance can be achieved.

Although the details are unknown, it is considered that the diameter and density of the pores are important for providing the porous layer with non-conductivity and electronic conductivity. For example, if the ratio A/R is less than 1, this concretely indicates that the pore diameter is large or the pore density is low. Due to this, an area of the metallic layer exposed to the aqueous electrolyte within one pore becomes large, or almost the entire surface of the current collector becomes a non-conductive member coating. If the pore diameter is large, the electrolyte permeates into the pores and reacts with the metallic layer of the current collector, causing a decomposition reaction. If the pore density is low, the electronic resistance between the electrode active material layer and the current collector is high. Therefore, since decomposition reaction is caused, or the electrical resistance between the current collector and the electrode active material layer becomes high, the ratio A/R of less than 1 is not preferable.

If the ratio A/R exceeds 50, this indicates, for example, that the pore diameter is small, or the pore density is high. If the pore diameter is small, the electronic resistance between the electrode active material layer and the current collector becomes high. If the density is high, the electrolyte easily permeates into the pores and reacts with the metallic layer of the current collector, causing a decomposition reaction; therefore, the effect of decomposition suppression cannot be sufficiently obtained. Therefore, it is difficult to achieve excellent cycle life performance and improve a charge-discharge efficiency.

The ratio A/R is preferably $2 \leq A/R \leq 40$. When the ratio is within this range, it is possible to maintain the electronic conductivity between the metallic layer of the current collector and the electrode active material layer by the porous layer while further suppressing a decomposition of the electrolyte. The ratio A/R is more preferably $3 \leq A/R \leq 30$, still more preferably $5 \leq A/R \leq 20$. When the ratio is within these ranges, it is possible to maintain the electronic conductivity between the metallic layer of the current collector and the electrode active material layer by the porous layer while suppressing a decomposition of the electrolyte even further.

Therefore, if the ratio A/R is within the range of $1 \leq A/R \leq 50$, the electronic conductive path of the electrode active material layer with the current collector via the porous layer is easily formed, while electrolysis on the surface of the porous layer is suppressed. Moreover, because part of the electrode active material layer can enter into the pores of the porous layer, even if charge and discharge is repeated, it is possible to suppress the gas generation and the increase of the electrical resistance associated with the dislodging of the electrode active material layer, rendering an excellent charge-discharge efficiency and cycle life performance possible.

The porous layer preferably has a film thickness of from 0.5 μm to 15 μm. If the thickness is within this range, it is possible to suppress gas generation on the current collector surface while maintaining the electronic conductivity between the electrode active material layer and the metallic layer of the current collector. A more preferable film thickness is from 1 μm to 10 μm. If the thickness is within this range, it is possible to further suppress gas generation on the current collector surface while maintaining the electronic conductivity between the electrode active material layer and the metallic layer of the current collector.

If the porous layer has a film thickness of less than 0.5 μm, the effect of suppressing the reaction between the aqueous electrolyte and the metallic layer by the porous layer becomes insufficient, and the effect of suppressing the electrolysis is not easily obtained. On the other hand, if the film thickness of the porous layer is greater than 15 μm, the contact between the aqueous electrolyte and the metallic layer by the porous layer becomes excessively suppressed. Thus, the electronic conductive path between the electrode active material layer and the metallic layer is not easily formed, making the electronic resistance become high, and sufficient charge and discharge cannot be conducted. Therefore, the film thickness exceeding 15 μm is not preferable.

The metallic layer preferably has a film thickness of from 5 μm to 35 μm. The film thickness of less than 5 μm is not preferable due to insufficient strength. If the film thickness is greater than 35 μm, the energy density is lowered. Therefore, the film thickness exceeding 35 μm is not preferable.

A ratio between thickness t of the porous layer and thickness T of the metallic layer (t/T) is preferably $0.02 \leq t/T \leq 1.1$. A preferable range of the ratio t/T is $0.2 < t/T \leq 0.5$.

Taking a sum of the thicknesses of the porous layer and the metallic layer, the electrode current collector according to the present approach preferably has a thickness of from 5.5 μm to 50 μm as a whole.

As described above, for the pores present in the porous layer, the pores observable by a scanning electron microscope (SEM) from the surface on the electrode active material layer side need not be continuous with the pores observed by SEM from the surface on the side opposite to the electrode active material layer side. By the presence of such non-continuous pores, the contact area between the metallic layer of the current collector and the electrolyte can be reduced. Because the contact area between the metallic layer of the current collector and the electrolyte can be reduced, hydrogen generated from the current collector can be suppressed. Furthermore, by subjecting the porous layer to a sealing treatment and plugging the pores, as if putting a lid on the pores observable from the surface on the electrode active material layer side, the area of contact between the current collector and the electrolyte can be further reduced and hydrogen generation from the current collector can be suppressed. By performing the sealing treatment, it is possible to improve binding between the active material layer and the porous layer and realize adequate electrolyte permeation into pores of the porous layer.

The proportion of pores observable from the surface on the electrode active material layer side of the porous layer is described as a degree of sealing. The concrete measuring method will be described below. The number of pores (surface pores) observable from the surface on the electrode active material layer side of the porous layer is taken as k1. The surface of the porous layer is milled by ion milling or the like, and the number of pores observable from the surface of the porous layer according to SEM observation is taken as k2. A value of the ratio of k1 to k2 is described as degree of sealing. That is, degree of sealing (%) = {(k2-k1) × 100} / k2. The degree of sealing is 0% when no sealing treatment is performed (k1 = k2), while the degree of sealing is 100% when the pores are completely sealed (k1 = 0). The degree of sealing is preferably from 20% to 80%. If the degree of sealing is within this range, binding between the electrode active material layer and the porous layer can be improved, and the electrolyte can be adequately permeated into the pores. As dislodging of the electrode active material layer off the current collector and gas generation can thereby be further suppressed, this range is preferable. A more preferable range is from 40% to 60%.

Hereinafter, a description will be given of a method of measuring the ratio A/R, and a method of measuring the degree of sealing.

<Method of Measuring Ratio A/R>

Whether a porous layer provided on a surface of a current collector is present can be examined by performing SEM observation on a cross-section of an electrode. First, a battery in a completely discharged state (state of charge (SOC) 0%) is disassembled in a glove box filled with argon. From the disassembled battery, an electrode to be measured is taken out. This electrode is washed with an appropriate solvent. As a washing solvent to be used, if the battery is a nonaqueous electrolyte battery, ethyl methyl carbonate or the like may be used favorably. For an aqueous electrolyte battery, pure water may be used favorably. If washing is insufficient, due to effects of lithium salts (e.g., lithium fluoride) remaining in the electrode, observation of the porous layer may be difficult.

The electrode taken out as described above is cut using ion milling and attached to a SEM sample table so that the cross-section can be observed. At this time, in order to prevent detachment or lifting of the electrode off from the sample table, treatment is applied using an electrically conductive tape, etc. The electrode attached to the SEM sample table is observed by a scanning electron microscope (SEM) . Three positions are taken for SEM observation images. At the time of SEM measurement, too, the electrode is preferably introduced to a sample chamber while maintaining an inert atmosphere state.

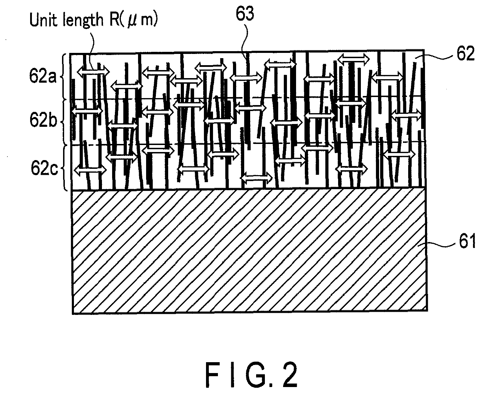

For the cross-section of the electrode, as illustrated in FIG. 2, in one SEM observation image, the porous layer is equally divided into three in the thickness direction, and virtual regions 62a, 62b, and 62c are set. In each of the virtual regions 62a, 62b, and 62c, ten positions of unit length R ($\mu$m) extending in the planar direction of the metallic layer are randomly set, and the number of pores intersecting each R is observed. Rs present in the thickness direction of the porous layer may overlap or be offset among the virtual regions, but Rs in the same virtual region should not overlap. That is, since the porous layer is equally divided into three in the thickness direction and ten positions of R are provided, the number of pores intersecting each R is measured for a total of thirty positions of R in one SEM observation image. Upon observation, the SEM observation may be performed at 100 times magnification, for example; however, the magnification is not limited to this, and may be any magnification at which pores can be observed. With respect of the three SEM observation images, an average value A is obtained from the number N of pores intersecting each R. That is, average value A = (total of number N of pores) / 90. The ratio between this average value A and the R is determined as a ratio A/R.

In the SEM observation image in which the porous layer is arranged to be located on top of the metallic layer, the planer direction is also substantially parallel to the lower side of the SEM observation image.

The unit length R may be set, for example, to 1 $\mu$m. The unit length R is preferably set to be 1 $\mu$m or more.

<Method of Measuring Pores Observable from Surface on Electrode Active Material Layer Side (Surface Pores) and Degree of Sealing>

The battery is disassembled as described above, obtaining an electrode. From this electrode, the electrode active material layer is peeled off to expose the surface of the porous layer that was in contact with the electrode active material layer. SEM observation is performed at ten positions of this exposed surface (first surface). At this time, the SEM observation may be performed at 100 times magnification, for example; however, the magnification is not limited to this, and may be any magnification at which pores can be observed. For these ten positions, parts that do not affect observation of the porous layer are marked so that the locations can be identified. The average value of the number of pores measured for the ten positions measured in this manner is defined as the number k1 of pores (surface pore count) observable from the surface on the electrode active material layer side. The surface of the porous layer at the above-described observed positions is milled, for example, by 100 nm in a depth direction of the porous layer via a method such as ion milling. A second surface is reached by removing a predetermined depth, e.g., 100 nm, from the first surface, and specified ten positions of the second surface are subjected to SEM observation. When an average value of the number of pores measured for these ten positions is defined as the number k2 of pores observable from the second surface, ((k2-k1) $\times$ 100% / k2) is determined as a degree of sealing. In order to align the position of observation between the surface pore observation position of the first surface, and the surface after milling, i.e. , the pore observation position of the second surface, position(s) where the surface is not milled by ion milling, etc. may be marked.

The first surface corresponds to a surface facing away from the metallic layer, among the surfaces of the porous layer. Namely, the first surface corresponds to a face on a reverse side with respect to the face where the metallic layer is in contact with the porous layer.

Hereinafter, the current collector according to the present approach will be described in detail.

The current collector according to the present approach includes the porous layer and the metallic layer. The porous layer contains at least alumina ($Al_2O_3$). Because the porous layer contains at least alumina, corrosion resistance is increased as compared to when the current collector is an aluminum metal. Thus, the current collector can be made thin, which is preferable because the energy density can be increased when a battery is produced.

The metallic layer is configured mainly from aluminum. "Aluminum" as referred to herein indicate aluminum as a sole metal or an alloy including aluminum. At least one element selected from the group consisting of Fe, Cu, Zn, Ga, In, Bi, Tl, Sn, Pb, and Ti, may be included in the metallic layer, in addition to aluminum. These elements may be referred to as "element A", hereinafter. These elements may be used alone or as a mixture of multiple elements, and may be included in the state of a metal or metal alloy. The metal and metal alloy may be included alone or as a mixture of two or more. When such an element is included in the metallic layer, the mechanical strength of the current collector is increased and thus the processing thereof is improved. Further, the effect of suppressing the electrolysis of the aqueous solvent to thereby suppress hydrogen generation is increased. Of the elements A described above, Zn, Pb, and Ti are more preferable.

The metallic layer is, for example, a metal foil. Further, the metallic layer is, for example, a foil made of an alloy containing aluminum. Such a foil may contain, for example, one or more elements described below, in addition to the element A. Besides the foil, examples of the shape of the metallic layer include a mesh and a porous structure. For improving the energy density and output, the shape of the foil having a small volume and a large surface area is desired.

Further, the negative electrode current collector may include a substrate containing a metal different from the element A. The substrate may be provided on a principal surface on a side opposite from the principal surface of the metallic layer on the porous layer side. In such a case, the hydrogen generation can be suppressed by the presence of a compound containing the element A on at least a part of the surface of the substrate. The compound containing the element A that is present on the surface may, for example, be made present on the surface of the substrate by plating the element A on the substrate. Alternatively, it is possible to perform plating treatment using an alloy containing element A on the surface of the substrate.

The porous layer may include at least one compound selected from the group consisting of an oxide of element A, a hydroxide of element A, a basic carbonate compound of element A, and a sulfate compound of element A. The oxide of element A and/or the hydroxide of element A and/or the basic carbonate compound of element A, and/or the sulfate compound of element A are preferably included in at least a part of the surface region of the current collector, within a depth region of from 5 nm to 1 $\mu$m in the depth direction from the current collector surface. An example of the oxide of element A includes ZnO, an example of the hydroxide of element A includes $Zn(OH)_2$, an example of the basic carbonate compound of element A includes $2ZnCO_3 \cdot 3Zn(OH)_2$, and an example of the sulfate compound of element A includes $ZnSO_4 \cdot 7H_2O$, and the like.

When at least one of an oxide of the element A, a hydroxide of the element A, a basic carbonate compound of the element A, and a sulfate compound of the element A is present in the surface layer portion of porous layer of the current collector, hydrogen generation can be suppressed. In addition, when these compounds are present in the surface layer portion of the current collector, the adhesion among the current collector, the active material, the electro-conductive agent, and the binder is improved, enabling an increase in paths for electronic conduction. Therefore, it is possible to improve the cycle performance and reduce the electrical resistance.

The substrate preferably includes at least one metal selected from the group consisting of Al, Fe, Cu, Ni, and Ti. The metals maybe included in the state of an alloy. The substrate may include the metal or metal alloy alone or as a mixture of two or more. The substrate preferably includes Al, Ti, or an alloy thereof, from the perspective of weight reduction.

Whether or not the porous layer is alumina, and whether or not a compound of at least one selected from the group consisting of aluminum and element A is contained in the current collector, can be examined by disassembling the battery as described above and then conducting inductively coupled plasma (ICP) emission spectrometry.

When disassembling the battery, after the battery is completely discharged (SOC 0%), the battery is disassembled in a glove box filled with argon. From the disassembled battery, the electrode to be measured is taken out. The electrode is washed with an appropriate solvent. As the solvent to be used for washing, for example, ethyl methyl carbonate is favorably used for a nonaqueous electrolyte battery. For an aqueous electrolyte battery, pure water is favorably used.

In addition, by scraping off the electrode active material layer from the washed electrode, the electrode active material layer is obtained in an isolated state.

For the electrode and electrode active material layer taken out in such manner, ICP measurement is performed.

The portion for which ICP measurement is performed with respect to the electrode is the portion where the electrode active material layer has been scraped off. By comparing the result of ICP measurement with respect of the electrode active material layer and the result of ICP measurement with respect of the electrode, the element (s) contained in the porous layer can be specified.

Hereinafter, a method of producing the current collector according to the present approach will be described.

<Production of Porous Layer>

When Porous Layers Are Formed on Both Principal Surfaces of Current Collector
A metallic foil as a current collector is immersed in a low-temperature acid. Next, a surface treatment is performed by conducting electricity to the metallic foil from the ends, thereby forming porous layers and a metallic layer in the current collector.

Specifically, an aluminum alloy foil (99% purity) having a thickness of 10 $\mu$m to 50 $\mu$m is immersed in a dilute sulfuric acid solution whose temperature is set to 0°C to 10°C. An aluminum foil may be used in place of the aluminum alloy foil. Next, a surface treatment is performed by conducting electricity to the foil of aluminum from the ends and flowing electricity. The voltage at this time is 30 V to 100 V, and the time is 5 minutes to 30 minutes.

When a Porous Layer Is Formed on One Principal Surface of Current Collector
One surface of a metallic foil as a current collector is covered with an insulator such as a tape. A metallic foil covered in this manner is immersed in a low-temperature acid. Next, a surface treatment is performed by conducting electricity to the metallic foil from the ends, thereby forming a porous layer and a metallic layer on one principal surface of the current collector.

Specifically, an aluminum alloy foil (99% purity) having a thickness of 10 $\mu$m to 50 $\mu$m, one surface of which is protected with an insulator, is immersed in a dilute sulfuric acid solution whose temperature is set to 0°C to 10°C. An aluminum foil having one surface protected with an insulator may be used in place of the aluminum alloy foil. Next, a surface treatment is performed by conducting electricity to the foil of aluminum from the ends and flowing electricity. The voltage at this time is 30 V to 100 V, and the time is 5 minutes to 30 minutes.

<Sealing Treatment>

After the above-described porous layer production treatment, the metallic foil is immersed in pure water. Specifically, the foil of aluminum is immersed in pure water set to 10°C to 50°C, thereby obtaining a current collector provided with a porous layer on the foil of aluminum.

The electrode current collector according to the first approach contains aluminum, and the electrode current collector includes a metallic layer, and a porous layer on one principal surface of the metallic layer. The porous layer includes plural pores extending in the thickness direction of the porous layer. For the observation image in which the cross-section of the electrode current collector is observed by the scanning electron microscope, the porous layer is equally divided into three in the thickness direction of the porous layer to set virtual regions, and in each virtual region, ten positions of unit length R ($\mu$m) extending in the planar direction of the metallic layer are set, and the number N of pores intersecting R is measured. At this time, the ratio between the average value A of the number N of pores and the R is $1 \leq A/R \leq 50$. With such a configuration, there can be provided a secondary battery capable of achieving a high charge-discharge performance and cycle life performance.

(Second Approach)

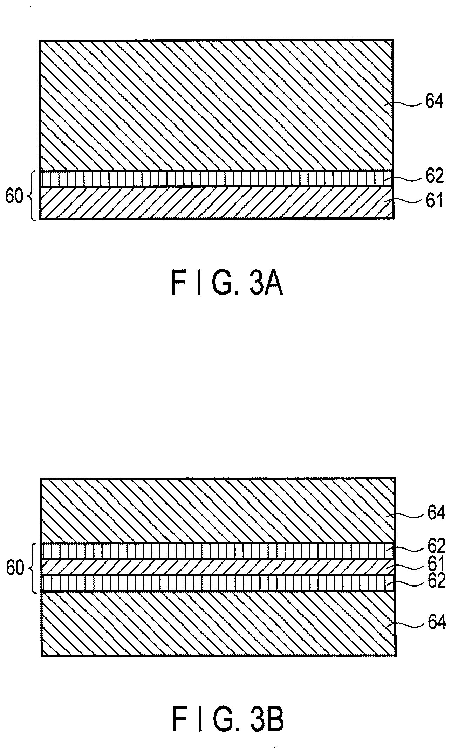

An electrode according to a second approach will be described with reference to FIG. 3. FIG. 3 is a schematic view illustrating an electrode according to the second approach. The electrode includes an electrode active material layer 64, and the current collector 60 according to the first approach. The electrode active material layer 64 is positioned on the current collector 60 according to the first approach. Specifically, the electrode active material layer 64 is in contact with the porous layer 62. FIG. 3A depicts a case where the current collector 60 includes the porous layer 62 on one principal surface of the metallic layer 61, while FIG. 3B depicts a case where the current collector 60 includes porous layers 62 and electrode active material layers 64 on both principal surfaces of the metallic layer 61. The electrode active material layer 64 contains an electrode active material, an electro-conductive agent, and a binder. Materials of each component member that can be used in the electrode according to the second approach will be described in detail. The electrode may be either of both a negative electrode or a positive electrode.

For either of the cases, one being the case where the current collector 60 is provided with the porous layer 62 and the electrode active material layer 64 on one principal surface of the metallic layer 61, and the other being the case where the current collector 60 is provided with porous layers 62 and electrode active material layers 64 on both principal surfaces of the metallic layer 61, the porous layer 62 is desirably present between the electrode active material layer 64 and the metallic layer 61.

<Negative Electrode>

The negative electrode includes a negative electrode current collector, and a negative electrode active material layer disposed on the negative electrode current collector. The negative electrode active material layer is disposed on at least one surface of the negative electrode current collector. For example, the negative electrode active material layer may be disposed on one surface of the negative electrode current collector, or negative electrode active material layers may be disposed on one surface of the negative electrode current collector and on a surface on the reverse side. In a case where the positive electrode is an electrode analogous to the second approach, the negative electrode does not have to include the porous layer.

The negative electrode active material layer includes a negative electrode active material including at least one compound selected from the group consisting of an oxide of titanium, a lithium titanium oxide, and a lithium titanium composite oxide. The oxides may be used alone or as a mixture of several oxides. For the oxides, Li insertion and extraction reaction occurs within a range of 1 V to 2 V (vs. Li/Li+) relative to a lithium reference potential. Therefore, when the oxides described above are used as the negative electrode active material of the secondary battery, the change in volume due to expansion and contraction, which accompany charge and discharge, is small, and thus long life can be realized.

The electrode current collector described in the first approach may be used as the negative electrode current collector. As another example, there may be used as the negative electrode current collector, a current collector including at least one element selected from the group consisting of Zn, Ga, In, Bi, Tl, Sn, Pb, Ti and Al within the current collector. These elements may be used alone or as a mixture of multiple elements, and may be included in the state of a metal or metal alloy. The metal and metal alloy may be included alone or as a mixture of two or more. When such an element is included in the current collector, the mechanical strength of the current collector is increased and thus the processing thereof is improved. Further, the effect of suppressing the electrolysis of the aqueous solvent to thereby suppress the hydrogen generation is increased. Of the elements described above, Zn, Pb, Ti and Al are more preferable.

The current collector is, for example, a metal foil made of these metals. Further, the current collector is, for example, a foil made of an alloy containing these metals. Such a foil may contain one or more elements aside from the elements described above. Besides the foil, examples of the shape of the current collector include a mesh and a porous structure. For improving the energy density and output, the shape of the foil having a small volume and a large surface area is desired.

The negative electrode active material includes one compound, or two or more compounds selected from the group consisting of an oxide of titanium, lithium titanium oxide, and lithium titanium composite oxide. Examples of the lithium titanium composite oxide include a niobium titanium oxide and a sodium niobium titanium oxide. The compounds desirably have a Li insertion potential in a range of 1 V (vs. Li/Li$^+$) to 3 V (vs. Li/Li$^+$).

Examples of the oxide of titanium include an oxide of titanium having a monoclinic structure, an oxide of titanium having a rutile structure, and an oxide of titanium having an anatase structure . For the oxide of titanium having each crystal structure, the composition before charging can be represented by $TiO_2$, and the composition after charging can be represented by $Li_xTiO_2$, where x is $0 \leq x$, preferably $0 \leq x \leq 1$. The structure before charging for the oxide of titanium having the monoclinic structure can be represented by $TiO_2(B)$.

Examples of the lithium titanium oxide include a lithium titanium oxide having a spinel structure (for example, the general formula: $Li_{4+x}Ti_5O_{12}$ where x is $-1 \leq x \leq 3$), a lithium titanium oxide having a ramsdellite structure (for example, $Li_{2+x}Ti_3O_7$ where $-1 \leq x \leq 3$), $Li_{1+x}Ti_2O_4$ where $0 \leq x \leq 1$, $Li_{1.1+x}Ti_{1.8}O_4$ where $0 \leq x \leq 1$, $Li_{1.07+x}Ti_{1.86}O_4$ where $0 \leq x \leq 1$, and $Li_xTiO_2$ where $0 \leq x$, preferably $0 < x \leq 1$), and the like.

Examples of the niobium titanium oxide include oxides represented by $Li_aTiM_bNb_{2\pm\beta}O_{7\pm\sigma}$ where $0 \leq a \leq 5$, $0 \leq b \leq 0.3$, $0 \leq \beta \leq 0.3$, $0 \leq \sigma \leq 0.3$, and M includes at least one selected from the group consisting of Fe, V, Mo, and Ta.

Examples of the sodium niobium titanium oxide include an orthorhombic Na-containing niobium titanium composite oxide represented by the general formula $Li_{2+v}Na_{2-w}M1_xTi_{6-y-z}Nb_yM2_zO_{14+\delta}$ where $0 \leq v \leq 4$, $0 \leq w \leq 2$, $0 \leq x \leq 2$, $0 \leq y \leq 6$, $0 \leq z \leq 3$, $y + z \leq 6$, $-0.5 \leq \delta \leq 0.5$, M1 includes at least one selected from the group consisting of Cs, K, Sr, Ba, and Ca, and M2 includes at least one selected from the group consisting of Zr, Sn, V, Ta, Mo, W, Fe, Co, Mn, and Al; with regard to subscripts w, y, and z, ranges of $0 \leq w < 2$, $0 < y < 6$, $y + z < 6$ are respectively preferable.

Preferable compounds for the negative electrode active material may include the oxide of titanium having an anatase structure, the oxide of titanium having a monoclinic structure, and the lithium titanium oxide having the spinel structure . Each compound has a Li insertion potential of from 1.4 V (vs. Li/Li$^+$) to 2 V (vs. Li/Li$^+$), and thus, when combined with a lithium manganese oxide as the positive electrode active material, for example, a high electromotive force can be obtained. Among these, the lithium titanium oxide having the spinel structure is more preferable because the change in volume due to the charge-discharge reaction is very small.

The negative electrode active material may be included in the negative electrode active material layer in the form of particles. The negative electrode active material particle may be independent primary particles, secondary particles each of which are agglomerated primary particles, or a mixture of independent primary particles and secondary particles. The shape of the particles is not particularly limited and, for example, may be a spherical shape, an elliptic shape, a flat shape, a fiber shape, or the like.

It is preferable that an average particle size (a diameter) of the secondary particles of the negative electrode active material is 3 $\mu$m or more, and more preferably from 5 $\mu$m to 20 $\mu$m. When the size is within this range, the surface area of the active material is small, and thus the effect of suppressing the hydrogen generation can be increased.

The negative electrode active material having the secondary particles whose average particle size is 3 $\mu$m or more can be obtained, for example, by the following method. First, starting materials for the active material are subjected to synthetic reaction to produce an active material precursor having an average particle size of 1 $\mu$m or less. Thereafter, the active material precursor is subjected to a firing treatment, followed by a pulverization treatment using a pulverizer such as a ball mill or a jet mill. Next, by a firing treatment, the active material precursors are agglomerated and grown into secondary particles having a large particle size.

The primary particles in the negative electrode active material desirably have an average particle size of 1 $\mu$m or less. Thereby, a diffusion distance of Li ions within the active material is shortened, and a specific surface area becomes larger. Therefore, excellent high input performance (rapid charging performance) can be obtained. On the other hand, when the average particle size is small, the particles become easily aggregated, whereby the distribution of the electrolyte becomes inclined toward the negative electrode, and the electrolyte may consequently be exhausted at the positive electrode. Thus, the lower limit of the average primary particle size is desirably 0.001 $\mu$m. The average particle size is more preferably from 0.1 $\mu$m to 0.8 $\mu$m.

The negative electrode active material particles desirably have a specific surface area of from 3 $m^2/g$ to 200 $m^2/g$, according to a BET method employing $N_2$ deposition. Thereby, the affinity between the negative electrode and the electrolyte can be further enhanced.

The negative electrode active material layer (excluding the current collector) desirably has a specific surface area of from 3 $m^2/g$ to 50 $m^2/g$. The specific surface area is more preferably from 5 $m^2/g$ to 50 $m^2/g$. The negative electrode active material layer may be a layer that is porous, includes the negative electrode active material, the electro-conductive agent, and the binder, and supported on the current collector.

The porosity of the negative electrode (excluding the current collector) is desirably in a range of 20% to 50%, whereby a negative electrode having excellent affinity between the negative electrode and the electrolyte and high density can be obtained. The porosity is more preferably in a range of 25% to 40%.

The electro-conductive agent may include carbon materials such as acetylene black, carbon black, coke, carbon fiber, and graphite, and powders of a metal such as nickel or zinc. The electro-conductive agent may be used alone or as a mixture of two or more agents. It is desirable to use the metal powder as the electro-conductive agent, because hydrogen is generated from the carbon material itself.

The binder may include, for example, polytetrafluoroethylene (PTFE), polyvinylidene fluoride (PVdF), fluororubber, ethylene-butadiene rubber, polypropylene (PP), polyethylene (PE), carboxymethyl cellulose (CMC), polyimide (PI), polyacrylimide (PAI), and the like. The binder may be used alone or as a mixture of two or more binders.

With respect to the mixing ratio of the negative electrode active material, the electro-conductive agent, and the binder in the negative electrode active material layer, it is preferable that the negative electrode active material is included in a range of 70% by weight to 95% by weight, the electro-conductive agent is included in a range of 3% by weight to 20% by weight, and the binder is included in a range of 2% by weight to 10% by weight. When the mixing ratio of the electro-conductive agent is 3% by weight or more, the electro-conductivity of the negative electrode can be made good, and when the mixing ratio is 20% by weight or less, the degradation of the electrolyte on the surface of the electro-conductive agent can be reduced. When the mixing ratio of the binder is 2% by weight or more, sufficient electrode strength can be obtained, and when the mixing ratio is 10% by weight or less, the insulating portions within the electrode can be reduced.

The negative electrode can be produced, for example, by the following method. First, the negative electrode active material, the electro-conductive agent, and the binder are dispersed in an appropriate solvent to prepare a slurry. The resulting slurry is coated onto the current collector, and the coat of applied slurry is dried to form the negative electrode active material layer on the current collector. Here, for example, the slurry may be coated on one side of the current collector, or may be coated on one surface of the current collector and a surface on the reverse side. Then, the current collector and the negative electrode active material layer are subjected to pressing, for example, heat pressing, whereby the negative electrode can be produced.

<Positive Electrode>

The positive electrode may include a positive electrode current collector, and a positive electrode active material layer supported on one surface or both of reverse surfaces of the positive electrode current collector, where the positive electrode active material layer includes an active material, an electro-conductive agent, and a binder. In a case where the negative electrode is analogous to the second approach, the positive electrode does not have to include the porous layer.

The current collector according to the first approach may be used as the positive electrode current collector. As another example, a foil, porous structure, or mesh made of a metal such as stainless steel, Al, or Ti is preferably used as the positive electrode current collector. In order to prevent corrosion of the current collector caused by the reaction of the current collector with the electrolyte, the surface of the current collector may be covered with another element.

As the positive electrode active material, there may be used a material capable of having lithium and sodium be inserted and extracted. The positive electrode may include one kind of positive electrode active material, or include two or more kinds of positive electrode active materials. Examples of the positive electrode active material include a lithium manganese composite oxide, a lithium nickel composite oxide, a lithium cobalt aluminum composite oxide, a lithium nickel cobalt manganese composite oxide, a spinel type lithium manganese nickel composite oxide, a lithium manganese cobalt composite oxide, a lithium iron oxide, a lithium fluorinated iron sulfate, a phosphate compound having an olivine crystal structure (for example, $Li_xFePO_4$ where $0 \leq x \leq 1$, or $Li_xMnPO_4$ where $0 \leq x \leq 1$), and the like. The phosphate compound having an olivine crystal structure has excellent thermal stability.

Examples of the positive electrode active material with which a high positive electrode potential can be obtained are described below. Examples include lithium manganese composite oxides such as $Li_xMn_2O_4$ having a spinel structure where $0 \leq x \leq 1$, preferably $0 < x \leq 1$, or $Li_xMnO_2$ where $0 \leq x \leq 1$, preferably $0 < x \leq 1$; a lithium nickel aluminum composite oxide such as $Li_xNi_{1-y}Al_yO_2$ where $0 \leq x \leq 1$ and $0 \leq y \leq 1$, preferably $0 < x \leq 1$ and $0 < y < 1$; lithium cobalt composite oxides such as $Li_xCoO_2$ where $0 \leq x \leq 1$, preferably $0 < x \leq 1$; lithium nickel cobalt composite oxides such as $Li_xNi_{1-y-z}Co_yMn_zO_2$ where $0 \leq x \leq 1$, $0 \leq y \leq 1$, $0 \leq z \leq 1$, preferably $0 < x \leq 1$, $0 < y < 1$, and $0 \leq z < 1$; lithium manganese cobalt composite oxides such as $Li_xMn_yCo_{1-y}O_2$ where $0 \leq x \leq 1$ and $0 \leq y \leq 1$, preferably $0 < x \leq 1$ and $0 < y < 1$; spinel type lithium manganese nickel composite oxides such as $Li_xMn_{2-y}Ni_yO_4$ where $0 \leq x \leq 1$ and $0 \leq y \leq 2$, preferably $0 < x \leq 1$ and $0 < y < 2$; lithium phosphates having an olivine structure such as $Li_xFePO_4$ where $0 \leq x \leq 1$, preferably $0 < x \leq 1$, $Li_xFe_{1-y}Mn_yPO_4$ where $0 \leq x \leq 1$ and $0 \leq y \leq 1$, preferably $0 < x \leq 1$ and $0 \leq y \leq 1$, or $Li_xCoPO_4$ where $0 \leq x \leq 1$; preferably $0 < x \leq 1$; fluorinated iron sulfates such as $Li_xFeSO_4F$ where $0 \leq x \leq 1$, and the like.

Further examples include sodium manganese composite oxide, sodium nickel composite oxide, sodium cobalt composite oxide, sodium nickel cobalt manganese composite oxide, sodium iron composite oxide, sodium phosphate compounds (for example, sodium iron phosphate and sodium vanadium phosphate), sodium iron manganese composite oxide, sodium nickel titanium composite oxide, sodium nickel iron composite oxide, and sodium nickel manganese composite oxide.

Examples of a preferable positive electrode active material include iron composite oxides (for example, $Na_yFeO_2$, where $0 \leq y \leq 1$), iron manganese composite oxides (for example, $Na_yFe_{1-x}Mn_xO_2$, where $0 \leq x \leq 1$, $0 \leq y \leq 1$, preferably $0 < x < 1$, $0 \leq y \leq 1$), nickel titanium composite oxide (for example, $Na_yNi_{1+x}Ti_xO_2$, where $0 \leq x \leq 1$, $0 \leq y \leq 1$, preferably $0 < x < 1$, $0 \leq y \leq 1$), a nickel iron composite oxide (for example, $Na_yNi_{1-x}Fe_xO_2$, where $0 \leq x \leq 1$, $0 \leq y \leq 1$, preferably $0 < x < 1$, $0 \leq y \leq 1$), nickel-manganese composite oxide (for example, $Na_yNi_{1-x}Mn_xO_2$, where $0 \leq x \leq 1$, $0 \leq y \leq 1$, preferably $0 < x < 1$, $0 \leq y \leq 1$), nickel manganese iron composite oxide (for example, $Na_yNi_{1-x-z}Mn_xFe_zO_2$, where $0 \leq x \leq 1$, $0 \leq y \leq 1$, $0 \leq z \leq 1$, $0 \leq 1-x-z \leq 1$, preferably $0 < x < 1$, $0 \leq y \leq 1$, $0 < z < 1$, $0 < 1-x-z < 1$), iron phosphate (for example, $Na_yFePO_4$, where $0 \leq y \leq 1$).

When a room temperature molten salt is used as the electrolyte of the battery, it is preferable to use a positive electrode active material including lithium iron phosphate, a compound represented by $Li_xVPO_4F$ where $0 \leq x \leq 1$, lithium manganese composite oxide, lithium nickel composite oxide, lithium nickel cobalt composite oxide, or a mixture thereof. Since these compounds have low reactivity with room temperature molten salts, cycle life can be improved.

The particle of the positive electrode active material may be independent primary particles, secondary particles in which each of the secondary particles include agglomerated primary particles, and a mixture including both the independent primary particles and the secondary particles. The primary particles of the positive electrode active material preferably have an average particle size (a diameter) of 10 $\mu$m or less, and more preferably from 0 .1 $\mu$m to 5 $\mu$m. The secondary particles of the positive electrode active material preferably have an average particle size (a diameter) of 100 $\mu$m or less, and more preferably from 10 $\mu$m to 50 $\mu$m.

It is preferable that at least a part of the particle surface of the positive electrode active material is covered with a carbon material. The carbon material may be in the form of a layered structure, a particulate structure, or a form of agglomerate of particles.

As the electro-conductive agent for increasing the electron conductivity of the positive electrode layer (positive electrode active material layer) and suppressing the contact resistance between the positive electrode layer and the current collector, examples include acetylene black, carbon black, graphite, carbon fiber having an average fiber diameter of 1 $\mu$m or less, and the like. The electro-conductive agent may be used alone or as a mixture of two or more agents.

The binder for binding the active material to the electro-conductive agent include, for example, polytetrafluoroethylene (PTFE), polyvinylidene fluoride (PVdF), fluororubber, ethylene-butadiene rubber, styrene-butadiene rubber (SBR), polypropylene (PP), polyethylene (PE), carboxymethyl cellulose (CMC), polyimide (PI), and polyacrylimide (PAI). The binder may be used alone or as a mixture of two or more binders.

With respect to the mixing ratio of the positive electrode active material, the electro-conductive agent, and the binder in the positive electrode layer (positive electrode active material layer), it is preferable that the positive electrode active material is included in a range of 70% by weight to 95% by weight, the electro-conductive agent is included in a range of 3% by weight to 20% by weight, and the binder is included in a range of 2% by weight to 10% by weight. When the mixing ratio of the electro-conductive agent is 3% by weight or more, the electro-conductivity of the positive electrode can be made good, and when the mixing ratio is 20% by weight or less, the degradation of the electrolyte on the surface of the electro-conductive agent can be reduced. When the mixing ratio of the binder is 2% by weight or more, sufficient electrode strength can be obtained, and when the mixing ratio is 10% by weight or less, the insulating portions within the electrode can be reduced.

The positive electrode can be produced, for example, by the following method. First, the positive electrode active material, the electro-conductive agent, and the binder are dispersed in an appropriate solvent to prepare a slurry. The resulting slurry is coated onto the current collector, and the coat of applied slurry is dried to form the positive electrode layer (positive electrode active material layer) on the current collector. Here, for example, the slurry may be coated on one side of the current collector, or may be coated on one surface of the current collector and a surface on the reverse side. Then, the current collector and the positive electrode layer are subjected to pressing, for example, heat pressing, whereby the positive electrode can be produced.

The electrode according to the second approach can provide a secondary battery excellent in charge-discharge performance and cycle life performance, by being provided with the electrode current collector according to the first approach.

(Third Approach)

A secondary battery according to a third approach includes a positive electrode, a negative electrode, a separator, an electrolyte, and a container member. Here, each component member for configuring the secondary battery according to the third approach will be described.

<Positive Electrode and Negative Electrode>

Description omitted, as these components have already been described in the second approach.

<Electrolyte>

Examples of the electrolyte include a nonaqueous electrolyte, an aqueous electrolyte containing an aqueous solvent and an electrolyte A, and a gel aqueous electrolyte obtained by combining a polymer material in this aqueous electrolyte. The nonaqueous electrolyte will be described later. The aforementioned polymer material includes, for example, polyvinylidene fluoride (PVdF), polyacrylonitrile (PAN), polyethylene oxide (PEO), and the like. The aqueous electrolyte will be described here. The aqueous electrolyte contains an alkaline metal salt, such as a lithium salt or a sodium salt. Therefore, the aqueous electrolyte is, for example, an aqueous electrolytic solution containing lithium ions or sodium ions. The aqueous electrolyte may contain both the lithium ions and sodium ions. For the aqueous electrolyte, examples of the anion species include chloride ion ($Cl^-$), bromide ion ($Br^-$), hydroxide ion ($OH^-$), lithium sulfate ion ($LiSO_4^-$), sulfate ion ($SO_4^{2-}$), and nitrate ion ($NO_3^-$).

Organic anions species that the aqueous electrolyte may contain include acetate ion, bis(trifluoromethanesulfonyl)imide ion ($N(SO_2CF_3)_2^-$), bis (fluorosulfonyl) imide ion ($N(SO_2F)_2^-$), and bis (oxalate) borate ion ($B[(OCO)_2]_2^-$). The aqueous electrolyte may contain one species of anion, or alternatively, may contain two or more species of anions. Therefore, as the electrolyte A, there may be used a substance that becomes dissociated and thus generates the above-described anion when the substance is dissolved in an aqueous solvent. In particular, preferable are lithium salts that dissociate into Li ion(s) and the anion described above. Examples of the lithium salt include LiCl, LiBr, LiOH, $Li_2SO_4$, $LiNO_3$, $LiN(SO_2CF_3)_2$ (LiTFSI: lithium bis(trifluoromethanesulfonyl)imide), $LiN(SO_2F)_2$ (LiFSI: lithium bis(fluorosulfonyl)imide), and $LiB[(OCO)_2]_2$ (LiBOB: lithium bis (oxalate) borate) . The species of lithium salt used may be one species or be two or more species. The aqueous electrolyte may contain salts other than lithium salts. Examples of salts other than lithium salts include $ZnSO_4$. Examples of the sodium salt include NaCl, $Na_2SO_4$, NaOH, $NaNO_3$, NaTFSA (sodium trifluoromethanesulfonylamide), and the like. The species of sodium salt used may be one specie or be two or more species.

Note, that in order to distinguish "electrolyte" as used for generically referring to the aqueous electrolyte and the gel aqueous electrolyte, from an electrolyte as a solute, the electrolyte as the solute is referred to as "electrolyte A" for the sake of convenience.

As the aqueous solvent, a solution including water may be used. Here, the solution including water may be pure water, or alternatively, a mixed solution or a mixed solvent of water and materials other than water. The proportion of water included in the aqueous solvent is, for example, a proportion of 50% or more by volume, and preferably a proportion of 90% or more by volume.

The aqueous electrolyte is prepared, for example, by dissolving an electrolyte salt at a concentration of 1 mol/L to 12 mol/L in the aqueous solvent. Even when the concentration of electrolyte salt within the aqueous electrolyte is changed, the amount of water in each electrode hardly changes.

In the aqueous electrolyte, the amount of water solvent (for example, amount of water in the aqueous solvent) is preferably 1 mol or more, based on 1 mol of salt as solute. The amount of water solvent is more preferably 3.5 mol or more, based on 1 mol of salt as solute.

The lithium salt that dissociates into Li ion(s) and the above anion has a relatively high solubility in aqueous solvents . For that reason, there can be obtained an electrolyte, in which the anion concentration is of a high concentration of from 1 M to 10 M, and thus having favorable Li ion diffusibility.

The electrolyte containing $NO_3^-$ and/or $Cl^-$ may be used in a wide anion concentration range of about 0.1 M to 10 M. From the perspective of fulfilling both ion conductivity and lithium equilibrium potential, the anion concentration is preferably of a high concentration of from 3 M to 12 M. It is more preferable that the anion concentration of the electrolyte containing $NO_3^-$ or $Cl^-$ is from 8 M to 12 M.

In order to suppress electrolysis of the aqueous electrolyte, LiOH, $Li_2SO_4$ and the like may be added to adjust pH. The pH is preferably 3 to 13, and more preferably 4 to 12.

The aqueous electrolyte containing $LiSO_4^-$ and/or $SO_4^{2-}$ may be used in an anion concentration range of about 0.05 M to 2.5 M. From the perspective of ion conductivity, the anion concentration is preferably of a high concentration of from 1.5 M to 2.5 M.

The $OH^-$ concentration in the aqueous electrolyte is desirably from $10^{-10}$ M to 0.1 M.

With regard to the pH of the aqueous electrolyte, the pH of the aqueous electrolyte of the positive electrode is preferably from 1 to 7. When the pH of the electrolyte of the positive electrode is 8 or more, an oxygen generation reaction resulting from electrolysis of water progresses advantageously, which is not preferable. When the pH is less than 1, degradation of the active material proceeds, which is not preferable. The pH of the electrolyte of the negative electrode is preferably from 7 to 14. When the pH of the electrolyte is less than 7, the hydrogen generation reaction due to the electrolysis of water advantageously advances, which is not preferable.

The solute in the aqueous electrolyte, i.e., the electrolyte salt can be determined qualitatively and quantitatively, for example, by ion chromatography. Ion chromatography is particularly preferable as the analysis method because of high sensitivity.

An example of specific measurement conditions for the qualitative and quantitative analysis of the solute included in the electrolyte according to ion chromatography is shown below:

    System: Prominence HIC-SP
    Analysis Column: Shim-pack IC-SA3
    Guard Column: Shim-pack IC-SA3 (G)
    Eluent: 3.6 mmol/L, aqueous sodium carbonate solution
    Flow Rate: 0.8 mL/minute
    Column Temperature: 45°C
    Injection Amount: 50 μL
    Detection: electric conductivity

Whether or not water is included in the electrolyte can be examined by gas chromatography - mass spectrometry (GC-MS) measurement. Water content in the electrolyte can be calculated, for example, from emission spectrometry using ICP, or the like. In addition, the mole numbers of the solvent can be calculated from the measurement of specific weight of the electrolyte. The same electrolyte may be used on the positive electrode side and the negative electrode side, or different electrolytes may be used.

An additive may be added to the aqueous electrolyte. For example, a surfactant may be added. The surfactant is, for example, polyoxyalkylene alkyl ether, polyethylene glycol, polyvinyl alcohol, thiourea, disodium 3,3'-dithiobis (1-propanphosphate), dimercaptothiadiazole, boric acid, oxalic acid, malonic acid, saccharin, sodium naphthalene sulfonate, gelatin, potassium nitrate, aromatic aldehyde, and heterocyclic aldehyde. The surfactants may be used alone or in combination of two or more. In addition, an additive metal may be present in the electrolyte either as an ion or as a solid.

Whether the surfactant is contained in the electrolyte can be examined using GC-MS described above. For example, the electrolyte is extracted with hexane, and the organic solvent in the electrolyte is separated. This separated organic solvent can be identified by conducting GC-MS and nuclear magnetic resonance measurement (NMR) . The additive metal can be examined by ICP.

An interfacial tension of the electrolyte is preferably 80 mN/m or less. Within this range, the electrolyte can permeate into the interior of the separator. The interfacial tension is more preferably 50 mN/m or less, and even more preferably 40 mN/m or less.

A method for measuring the interfacial tension is described below.

<Measuring method of interfacial tension of the aqueous electrolyte>

The interfacial tension of the aqueous electrolyte can be determined by, for example, a hanging-drop method. As the measuring apparatus, for example, an automatic contact angle meter Dme-201 manufactured by Kyowa Interface Science Co., Ltd. can be used. As the measurement conditions, for example, the conditions shown in the following Table 1 are used.

[Table 1]
Interfacial tension measurement conditions

| | |
|---|---|
| Measurement interval (ms): | 1000 |
| Number of times: | 21 |
| Fit interval: | 60 |
| End point interval (dot): | 30 |
| Wait time before measurement (ms): | 10000 |
| Algorithm: | Auto |
| Image mode: | Frame |
| Auto threshold level: | Yes |
| Black level (%): | 70 |
| Threshold level: | 128 |
| Image processing area left: | 30 |
| Image processing area top: | 30 |
| Image processing area right: | 30 |
| Image processing area bottom: | 30 |
| Auto droplet adhesion recognition: | Yes |
| Droplet adhesion recognition line (dot) : | 50 |
| Curvature correction: | No |
| Curvature radius ($\mu$m): | 1000000 |
| Control mode: | Standard |
| Auto droplet creation: | Yes |
| Liquid amount control: | Yes |
| Created liquid amount (pL): | 2 |
| Auto droplet adhesion operation: | Yes |
| Auto sample table movement: | Yes |
| Reciprocation: | No |
| Measuring movement interval (mm): | 6 |
| Number of times of repetition: | 10 |

The hanging-drop method is used for the calculation of the interfacial tension, and the interfacial tension of the aqueous electrolyte is calculated from Equation (2) shown below.

$$\text{Interfacial tension (mN/M)} = \Delta\rho gde^2 (1/H) \ldots (2)$$

Each symbol in Equation (2) is as follows:
$\Delta\rho$ : Density difference, g: Gravitational acceleration, de: Maximum diameter of the hanging drop, 1/H: Correction coefficient.
For example, measurements are made five times, and the average value thereof is taken as the interfacial tension.

<Measuring method of contact angle of the aqueous electrolyte>

The contact angle of the aqueous electrolyte can be determined by, for example, a droplet method. As the measuring apparatus, for example, an automatic contact angle meter Dme-201 manufactured by Kyowa Interface Science Co., Ltd. can be used. As the measurement conditions, for example, the conditions shown in the following Table 2 are used.

[Table 2]

Contact angle measurement conditions

| | |
|---|---|
| Measurement interval (ms): | 1000 |
| Number of times: | 21 |
| Analysis technique: | Sessile drop |
| Analysis method: | Standard |
| Three-state system: | No |
| Fit interval designation: | No |
| Fit interval: | 60 |
| End point interval (dot): | 30 |
| Wait time before measurement (ms): | 10000 |
| Algorithm: | Auto |
| Image mode: | Frame |
| Auto threshold level: | Yes |
| Black level (%): | 70 |
| Threshold level: | 128 |
| Image processing area left: | 30 |
| Image processing area top: | 30 |
| Image processing area right: | 30 |
| Image processing area bottom: | 30 |
| Auto droplet adhesion recognition: | Yes |
| Droplet adhesion recognition line (dot) : | 50 |
| Curvature correction: | No |
| Curvature radius ($\mu$m): | 1000000 |
| Control mode: | Standard |
| Auto droplet creation: | Yes |
| Liquid amount control: | Yes |
| Created liquid amount ($\mu$L): | 2 |
| Auto droplet adhesion operation: | Yes |
| Auto sample table movement: | Yes |
| Reciprocation: | No |
| Measuring movement interval (mm): | 6 |
| Number of times of repetition: | 10 |
| Auto liquid sample switching measurement: | 0 |
| Solid sample replacement: | No |
| Liquid amount unit: | $\mu$L |
| Permitted range mode: | No |
| Permitted range lower limit: | 0 |
| Permitted range upper limit: | 180 |
| Stage control mode: | 1 |

The nonaqueous electrolyte may contain an organic solvent and an electrolyte salt. The organic solvent is favorably one in which a composite electrolyte layer hardly becomes molten, and can thereby be present in a stable manner.

As the nonaqueous electrolyte, a liquid nonaqueous electrolyte or gel nonaqueous electrolyte may be used. The liquid nonaqueous electrolyte is prepared by dissolving the electrolyte salt in the organic solvent. The concentration of electrolyte salt is preferably within the range of from 0.5 mol/L to 2.5 mol/L. The gel nonaqueous electrolyte is prepared by obtaining a composite of a liquid nonaqueous electrolyte and a polymeric material. The liquid nonaqueous electrolyte has higher Li conductivity as compared to the gel nonaqueous electrolyte, and is thus preferable since excellent input-output performance can be obtained.

Examples of the organic solvent include N-methyl-2-pyrrolidone (NMP), cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); $\gamma$-butyrolactone (GBL), acetonitrile (AN), and sulfolane (SL). These organic solvents may be used singularly or as a mixed solvent.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), lithium bistrifluoromethylsulfonylimide [$LiN(CF_3SO_2)_2$], and mixtures thereof. The organic electrolyte may include other electrolyte salts.

<Separator>

A separator may be disposed between the positive electrode and the negative electrode. By configuring the separator from an insulating material, electrical contact between the positive electrode and the negative electrode can be prevented. In addition, it is desirable to use a separator having a shape that allows the electrolyte to migrate between the positive electrode and the negative electrode. Examples of the separator include a nonwoven, a film, a paper sheet, and the like. Examples of the material forming the separator may include polyolefin such as polyethylene and polypropylene, and cellulose. Preferable examples of the separator include a nonwoven including cellulose fiber and a porous film including a polyolefin fiber. The separator preferably has a porosity of 60% or more. The fiber diameter is preferably 10 $\mu$m or less. When the fiber diameter is 10 $\mu$m or less, the affinity of the separator with the electrolyte is improved, thus resulting in decreased battery resistance. The more preferable range of the fiber diameter is 3 $\mu$m or less. The cellulose-fiber-including nonwoven having a porosity of 60% or more can be well impregnated with the electrolyte, and can exhibit a high output performance at a low temperature to a high temperature. In addition, even during storage for a long time in a charged state, during float charging, or when exposed to overcharge, such a separator does not react with the negative electrode, and short-circuiting between the negative electrode and the positive electrode caused by precipitation of dendrites of the lithium metal does not occur. The more preferable range is from 62% to 80%.

A solid electrolyte may also be used as the separator. As the separator, oxides such as LATP ($Li_{1+x}Al_xTi_{2-x}(PO_4)_3$ where $0.1 \leq x \leq 0.4$) having a NASICON framework, amorphous LIPON ($Li_xPO_yN_z$ where $2.6 \leq x \leq 3.5$, $1.9 \leq y \leq 3.8$, and $0.1 \leq z \leq 1.3$, e.g., $Li_{2.9}PO_{3.3}N_{0.46}$; or $Li_{3-x}PO_{4-x}N_x$ where $0.05 \leq x \leq 0.5$), and garnet LLZ ($Li_{5+x}La_3M_{2-x}Zr_xO_{12}$ where $0 \leq x \leq 2$ and M is at least one selected from the group consisting of Nb and Ta, e.g., $Li_7La_3Zr_2O_{12}$) are preferable.

In addition, $\beta$ alumina, $Na_{1+x}Zr_2Si_xP_{3-x}O_{12}$ ($0 \leq x \leq 3$), $NaAlSi_3O_8$, and the like can also be mentioned.

There also may be used a composite solid electrolyte having a solid electrolyte applied onto at least one principal surface of a porous self-supporting film, for example, a nonwoven. For the solid electrolyte, here, the above-described solid electrolyte may be used. In addition, $\beta$ alumina may be included, also. A composite solid electrolyte may be configured by mixing the solid electrolyte with a polymeric material, also.

The separator preferably has a thickness of from 10 $\mu$m to 100 $\mu$m, and a density of from 0.2 $g/cm^3$ to 0.9 $g/cm^3$. Within these ranges, the mechanical strength and the reduction of battery resistance can be well balanced, and a secondary battery having a high output and having suppressed internal short-circuiting can be provided. In addition, there is little thermal contraction of the separator under a high temperature environment, and a good high temperature storage performance can be brought about. Plural of the above-mentioned configurations may be combined to be used as the separator. A particularly preferable configuration is the case using a separator having the solid electrolyte applied onto both principal surfaces of a porous self-supporting film. By using this separator, warping of the separator itself can be more suppressed compared to a case of performing application onto a single principal surface, making it possible for the porous film itself to be made even thinner.

<Container Member>

A container made of metal, a container made of laminate film, a container made of resin, such as polyethylene or polypropylene, may be used for a container member in which the positive electrode, the negative electrode, and the electrolyte are housed.

As the container made of metal, a metal can made of nickel, iron, stainless steel, or element A and having an angular or cylindrical shape may be used.

The container made of resin and the container made of metal desirably have a wall thickness within a range of 1 mm or less, and more preferably 0.5 mm or less. An even more preferable range is 0.3 mm or less. The lower limit of the wall thickness is desirably 0.05 mm.

The laminate film includes, for example, a multilayer film in which a metal layer is covered with resin layers, and the like. Examples of the metal layer include a stainless steel foil, an aluminum foil, and an aluminum alloy foil. A polymer such as polypropylene (PP), polyethylene (PE), nylon, and polyethylene terephthalate (PET) may be used for the resin layer. The laminate film preferably has a thickness of a range of 0.5 mm or less, and more preferably a range of 0.2 mm or less. The lower limit of the thickness of the laminate film is desirably 0.01 mm.

The secondary battery according to the approach may be applied to secondary batteries of various forms such as an angular shaped form, cylindrical shaped form, a flat-type, a thin-type, or a coin-type. The secondary battery preferably has a bipolar structure, whereby there is an advantage in that a cell having plural electrode units connected in series can be produced with a single cell.

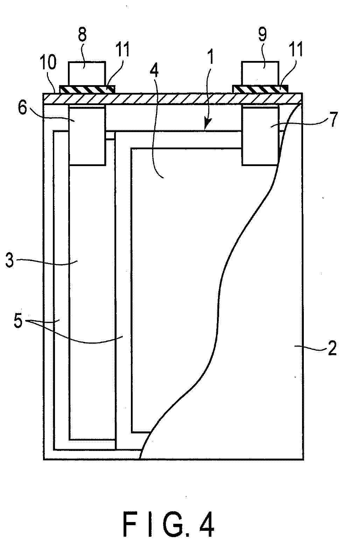

An example of a secondary battery according to the approach is explained with reference to FIG. 4 to FIG. 7.

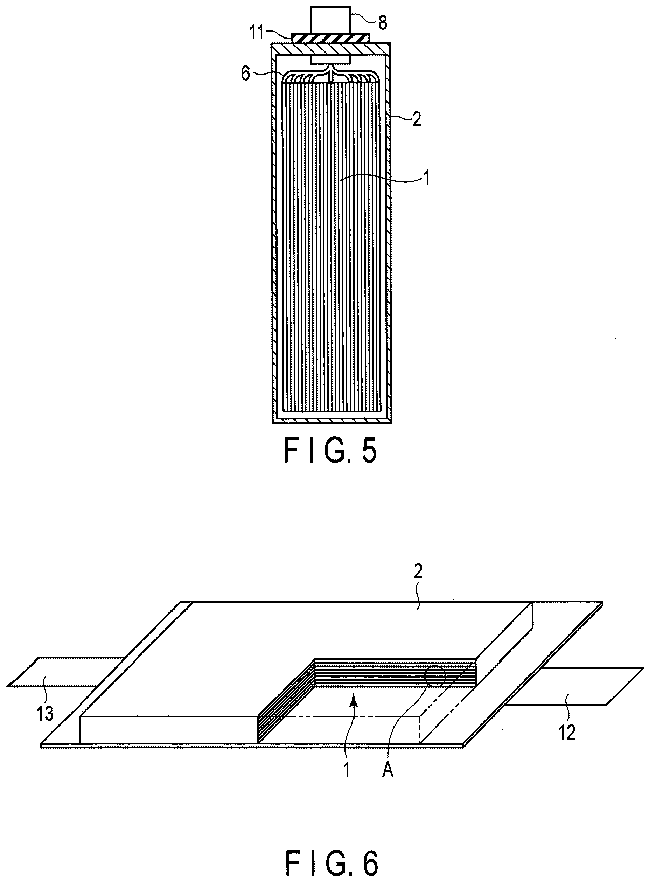

One example of a secondary battery using a container made of metal is shown in FIG. 4 and FIG. 5.

The electrode group 1 is housed in a rectangular-tube-shaped metal container 2. The electrode group 1 has a structure in which the positive electrode 3, the negative electrode 4, and the separator 5 disposed therebetween are spirally wound in a manner such that a flat shape is obtained. An electrolyte (not shown) is held in the electrode group 1. As shown in FIG. 5, a belt-shaped positive electrode lead 6 is electrically connected to each of plural positions on the edge of the positive electrode 3 located on the end surface of the electrode group 1. A belt-shaped negative electrode lead 7 is electrically connected to each of plural positions on the edge of the negative electrode 4 located on the end surface. The plural positive electrode leads 6 are bundled into one, and electrically connected to a positive electrode electro-conduction tab 8. A positive electrode terminal is configured by the positive electrode leads 6 and the positive electrode electro-conduction tab 8. The negative electrode leads 7 are bundled into one, and connected to a negative electrode electro-conduction tab 9. A negative electrode terminal is configured by the negative electrode leads 7 and the negative electrode electro-conduction tab 9. A metal sealing plate 10 is fixed over an opening of the metal container 2 by welding or the like. The positive electrode electro-conduction tab 8 and the negative electrode electro-conduction tab 9 are respectively drawn out to the outside through outlets provided on the sealing plate 10. The inner circumferential surface of each outlet of the sealing plate 10 is covered with an insulating member 11, in order to avoid short-circuiting due to contact of the sealing plate 10 with the positive electrode electro-conduction tab 8 and the negative electrode electro-conduction tab 9.

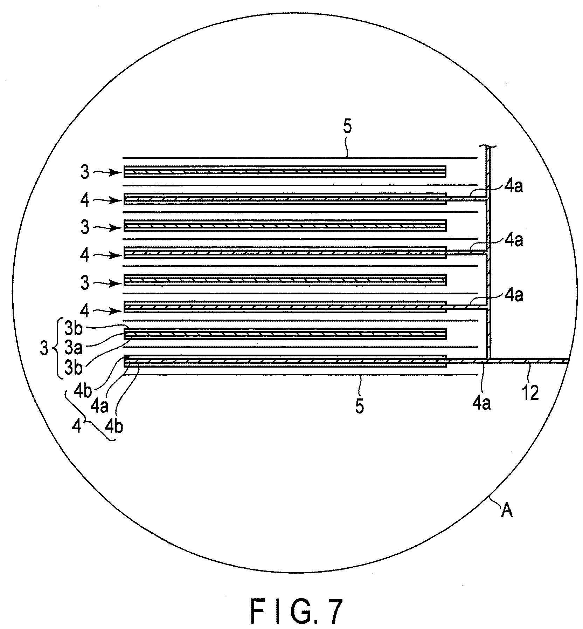

One example of a secondary battery using a container member made of the laminate film is shown in FIG. 6 and FIG. 7.

A stacked electrode group 1 is housed in a bag-form container 2 made of a laminate film where a metal layer is sandwiched between two resin films. As shown in FIG. 7, the stacked electrode group 1 has a structure in which positive electrodes 3 and negative electrodes 4 are alternately stacked with separator(s) 5 sandwiched therebetween. The electrode group 1 includes plural positive electrodes 3, each of which includes a positive electrode current collector 3a, and positive electrode active material layers 3b formed on both of reverse surfaces of the positive electrode current collector 3a. The electrode group 1 includes plural negative electrodes 4, each of which includes a negative electrode current collector 4a, and negative electrode active material layers 4b formed on both of reverse surfaces of the negative electrode current collector 4a. An end of the negative electrode current collector 4a of each of the negative electrodes 4 protrudes out from the positive electrodes 3. The protruded negative electrode current collector 4a is electrically connected to a belt-shaped negative electrode terminal 12. The distal end of the belt-shaped negative electrode terminal 12 is extended out from the container 2. Although not depicted, an end of the positive electrode current collector 3a of the positive electrode 3 protrudes from the electrodes 4 at the side opposite from the protruded end of the negative electrode current collector 4a. The positive electrode current collectors 3a protruding from the negative electrodes 4 are electrically connected to a belt-shaped positive electrode terminal 13. The distal end of the belt-shaped positive electrode terminal 13 is positioned on the opposite side from the negative electrode terminal 12, and extends out from a side of the container 2.

In the secondary batteries shown in FIG. 4 to FIG. 7, there may be provided a safety valve for releasing hydrogen gas that has generated within the container to the outside. As the safety valve, either one of a return type valve, which operates when an internal pressure becomes higher than a pre-determined value and functions as a sealing plug when the internal pressure is reduced, and a non-return type valve, which does not recover its function as the sealing plug once it is operated, may be used. Although the secondary batteries shown in FIG. 4 to FIG. 7 are sealed batteries, an open type battery is possible, in the case that a circulation system for converting hydrogen gas into water is provided.

According to the approach described above, there can be provided a secondary battery including an electrode provided with the electrode current collector according to the first approach. By virtue of including the electrode according to the second approach, there can be provided a secondary battery excellent in charge-discharge performance and cycle life performance.

(Fourth Approach)

According to a fourth approach, a battery module including a secondary battery as a unit cell is provided. As the secondary battery, the secondary battery according to the third approach may be used.

Examples of the battery module include a battery module including plural unit cells as structural units where the unit cells are electrically connected in series or in parallel in each structural unit, a battery module including a unit structured by plural unit cells that are electrically connected in series or a unit structured by plural unit cells that are electrically connected in parallel, and the like.

The battery module may be housed in a housing. As the housing, a metal can formed of aluminum alloy, iron, stainless steel, or the like, a plastic container, or the like may be used. The container desirably has a wall thickness of 0.5 mm or more.

Examples of the aspect in which the plural secondary batteries are electrically connected in series or in parallel include an aspect in which plural secondary batteries each having a container are electrically connected in series or in parallel, and an aspect in which plural electrode groups are housed in the same housing and are electrically connected in series or in parallel. Specific examples of the former are those in which positive electrode terminals and negative electrode terminals of plural secondary batteries are connected via metal bus bars (for example, aluminum, nickel, or copper). Specific examples of the latter include an aspect in which plural electrode groups are housed in one housing in a state of being electrochemically insulated from each other by partitions, and these electrode groups are electrically connected to each other in series. When the number of batteries that are electrically connected in series is in a range of 5 to 7, voltage compatibility with a lead storage battery becomes good. In order to further increase the voltage compatibility with the lead storage battery, a structure in which 5 or 6 unit cells are connected in series is preferable.

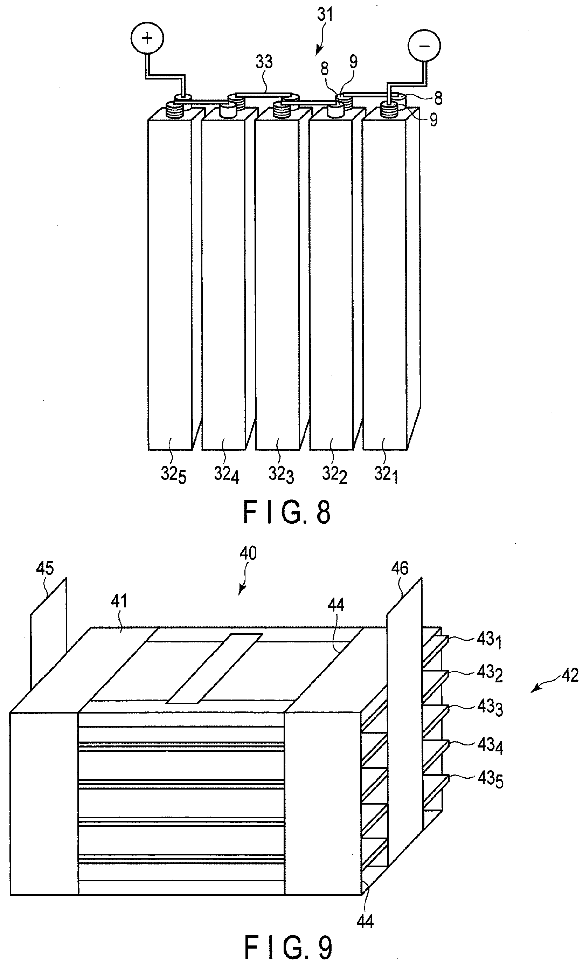

One example of the battery module is explained with reference to FIG. 8. A battery module 31, shown in FIG. 8, includes plural square-type secondary batteries $32_1$ to $32_5$ according to the third approach (for example, FIG. 4 or FIG. 5) as unit cells. A positive electrode electro-conduction tab 8 of battery $32_1$ and a negative electrode electro-conduction tab 9 of battery $32_2$ positioned adjacent thereto, are electrically connected by a lead 33. Further, a positive electrode electro-conduction tab 8 of the battery $32_2$ and a negative electrode electro-conduction tab 9 of battery $32_3$ positioned adjacent thereto, are electrically connected through a lead 33 . In this manner, the batteries $32_1$ to $32_5$ are connected in series.

According to the battery module of the fourth approach, by including the secondary battery according to the third approach, there can be provided a battery module excellent in storage performance and cycling performance.

(Fifth Approach)

According to a fifth approach, a battery pack is provided. The battery pack includes the secondary battery according to the third approach.

The battery pack according to the fifth approach may include one or more secondary batteries (unit cells) according to the third approach described above. The plural secondary batteries, which may be included in the battery pack according to the fifth approach, may be electrically connected to each other in series, in parallel or in a combination of in series and in parallel. The plural secondary batteries may be electrically connected to compose a battery module. In the case of composing a battery module from plural secondary batteries, the battery module according to the fourth approach may be used.

The battery pack according to the fifth approach may further include a protective circuit. The protective circuit has a function of controlling the charge and discharge of the secondary battery(s). Alternatively, a circuit included in equipment that uses the battery pack as a power source (for example, an electronic device, a vehicle such as an automobile, or the like) may be used as the protective circuit of the battery pack.

Moreover, the battery pack according to the fifth approach may further include an external power distribution terminal. The external power distribution terminal is configured to externally output current from the secondary battery and/or to input current into unit cell(s) 51. In other words, when the battery pack is used as a power source, the current is externally provided through the external power distribution terminal. When the battery pack is charged, the charge current (including a regenerative energy of a power of a vehicle such as an automobile, or the like) is provided to the battery pack through the external power distribution terminal 59.

An example of the battery pack according to the fifth approach is explained with reference to FIG. 9. FIG. 9 is a schematic perspective view showing one example of the battery packs.

A battery pack 40 includes a battery module including the secondary battery shown in FIGS. 6 and 7. The battery pack 40 includes a housing 41, and a battery module 42 housed in the housing 41. In the battery module 42, plural (for example, five) secondary batteries $43_1$ to $43_5$ are electrically connected in series. The secondary batteries $43_1$ to $43_5$ are stacked in a thickness direction. The housing 41 has an opening 44 on each of an upper portion and four side surfaces. The side surfaces, from which the positive and negative electrode terminals 12 and 13 of the secondary batteries $43_1$ to $43_5$ protrude, are exposed through the opening 44 of the housing 41. A positive electrode terminal 45 for output of the battery module 42 is belt-shaped, and one end thereof is electrically connected to any or all of the positive electrode terminals 13 of the secondary batteries $43_1$ to $43_5$, and the other end protrudes beyond the opening 44 of the housing 41 and thus protrudes past the upper portion of the housing 41. On the other hand, a negative electrode terminal 46 for output of the battery module 42 is belt-shaped, and one end thereof is electrically connected to any or all of the negative electrode terminals 12 of the secondary batteries $43_1$ to $43_5$, and the other end protrudes beyond the opening 44 of the housing 41 and thus protrudes past the upper portion of the housing 41.

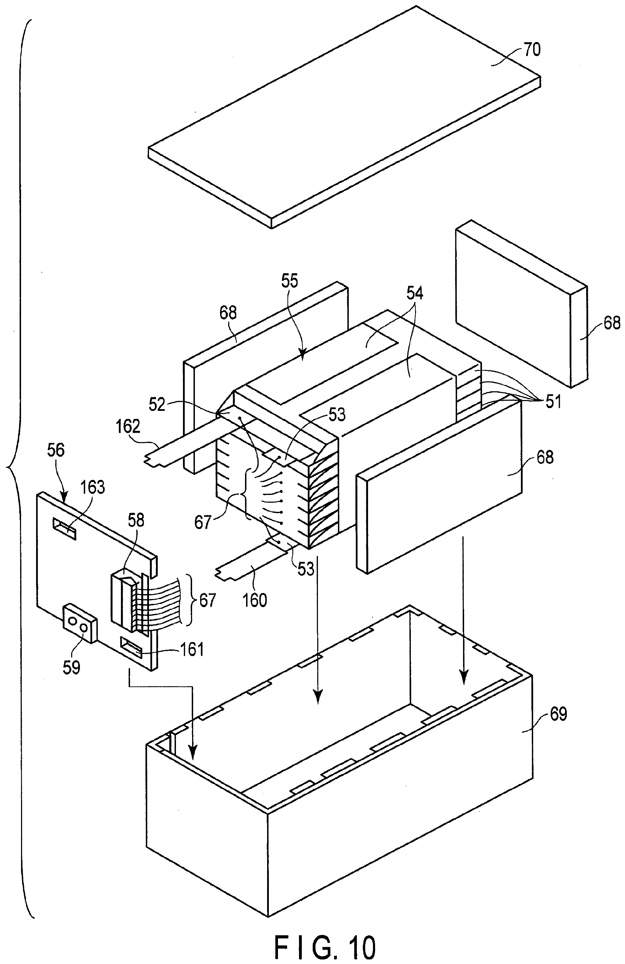

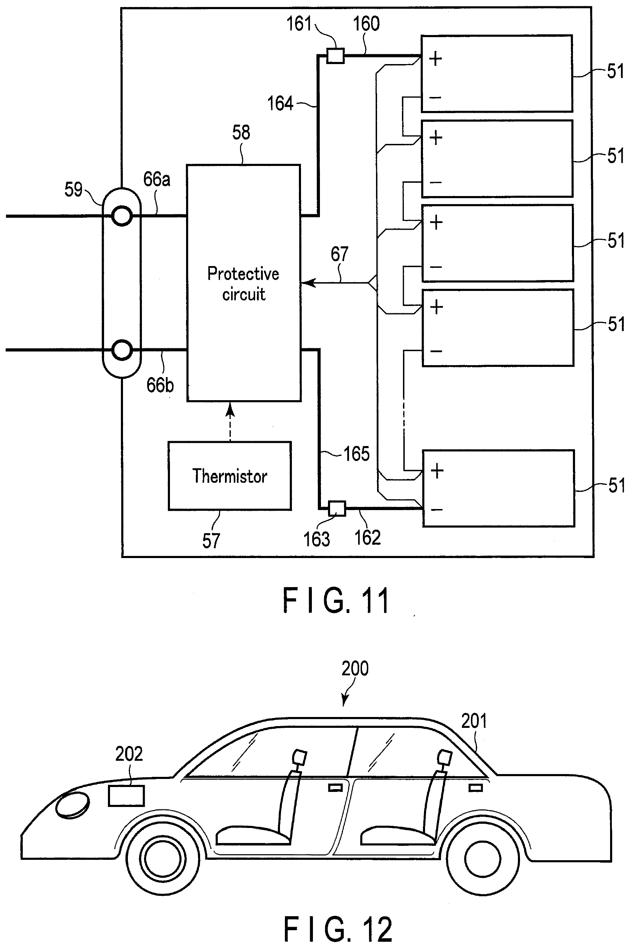

Another example of the battery pack according to the fifth approach is explained in detail with reference to FIG. 10 and FIG. 11. FIG. 10 is an exploded perspective view showing another example of the battery pack according to the fifth approach. FIG. 11 is a block diagram showing an electric circuit of the battery pack in FIG. 10.

Plural unit cells 51, i.e. flat-type secondary batteries, are stacked such that externally extending negative electrode terminals 52 and positive electrode terminals 53 are arranged in the same direction, and the resulting stack is fastened with adhesive tape (s) 54 to form a battery module 55. The unit cells 51 are electrically connected to each other in series, as shown in FIG. 11.

A printed wiring board 56 is disposed facing the side surfaces of the unit cells 51 from which the negative electrode terminals 52 and the positive electrode terminals 53 extend out. A thermistor 57, a protective circuit 58, and an external power distribution terminal 59 are mounted on the printed wiring board 56, as shown in FIG. 11. An electrically insulating plate (not shown) is attached to the surface of the printed wiring board 56 facing the battery module 55 to avoid unnecessary connection with wirings of the battery module 55.

A positive electrode lead 160 is connected to a positive electrode terminal 53 located lowermost in the battery module 55, and the distal end of the lead is inserted into a positive electrode-side connector 161 on the printed wiring board 56 and thus electrically connected thereto. A negative electrode lead 162 is connected to a negative electrode terminal 52 located uppermost in the battery module 55, and the distal end of the lead is inserted into a negative electrode-side connector 163 on the printed wiring board 56 and thus electrically connected thereto. The connectors 161 and 163 are connected to the protective circuit 58 through wirings 164 and 165 formed on the printed wiring board 56.

The thermistor 57 detects the temperature of the unit cells 51, and the detection signals are sent to the protective circuit 58. The protective circuit 58 can shut off a plus wiring (positive electrode-side wiring) 66a and a minus wiring (negative electrode-side wiring) 66b between the protective circuit 58 and the external power distribution terminal 59 under predetermined conditions. A predetermined condition is, for example, the case where the temperature detected by the thermistor 57 becomes a predetermined temperature or higher. Another example of the predetermined condition is the case when the over-charge, over-discharge or over-current of the unit cells 51 is detected. The detection of the over-charge, or the like, is performed for each individual unit cell 51 or for the battery module 55. When each individual unit cell 51 is detected, the battery voltage may be detected, or the positive electrode potential or negative electrode potential may be detected. In the latter case, a lithium electrode, which is used as a reference electrode, is inserted into each individual unit cell 51. In the case of FIG. 10 and FIG. 11, wiring 67 for voltage detection is connected to each of the unit cells 51, and the detected signals are sent to the protective circuit 58 through the wirings 67.

Protective sheets 68, made of rubber or resin, are arranged on three side planes of the battery module 55 except for the side plane where the positive electrode terminals 53 and the negative electrode terminals 52 protrude out.

The battery module 55 is housed in a housing container 69 together with the protective sheets 68 and the printed wiring board 56. That is, the protective sheets 68 are arranged on both internal surfaces along a long side direction and one internal surface along a short side direction of the housing container 69, and the printed wiring board 56 is disposed on the opposite internal surface along the short side direction. The battery module 55 is located in a space surrounded by the protective sheets 68 and the printed wiring board 56. A lid 70 is attached to the upper surface of the housing container 69.

In order to fix the battery module 55, a heat-shrinkable tape may be used instead of the adhesive tape(s) 54. In such a case, the battery module is fastened by placing the protective sheets on both side surfaces of the battery module, revolving the heat-shrinkable tape around the battery module, and thermally shrinking the heat-shrinkable tape.

In FIGS. 10 and 11, an aspect has been shown in which the unit cells 51 are connected in series; however, in order to increase the battery capacity, the cells may be connected in parallel. Alternatively, the connection in series and the connection in parallel may be combined. Furthermore, assembled battery packs may be connected to each other in series and/or in parallel.

The aspect of the battery pack may be appropriately changed depending on the application thereof. Preferable applications of the battery pack are those in which charge and discharge at large current is demanded. Specifically the battery pack may be used, for example, as a power source of a digital camera, as an onboard battery for installing in a vehicle such as a two-wheeled to four-wheeled hybrid electric automobile, a two-wheeled to four-wheeled electric automobile, a power-assisted bicycle, or a railway car, or as a stationary battery. In particular, the onboard use is favorable.

In a vehicle onto which the battery pack according to the fifth approach has been installed, the battery pack is configured, for example, to recover regenerative energy from motive force of the vehicle.

According to the battery pack of the fifth approach described above, by including the secondary battery provided with the current collector according to the first approach, there can be provided a battery pack excellent in charge-discharge performance and cycle life performance.

(Sixth Approach)

According to a sixth approach, a vehicle is provided. The vehicle includes the battery pack according to the fifth approach.

In the vehicle according to the sixth approach, the battery pack is configured, for example, to recover regenerative energy from motive force of the vehicle.

The vehicle may include a mechanism (e.g. , a regenerator) for converting kinetic energy of the vehicle into regenerative energy.

Examples of the vehicle according to the sixth approach include two-wheeled to four-wheeled hybrid electric automobiles, two-wheeled to four-wheeled electric automobiles, power-assisted bicycles, and railway cars.

In the vehicle according to the sixth approach, the installing position of the battery pack is not particularly limited. For example, when installing the battery pack on the vehicle, the battery pack may be installed in the engine compartment of the vehicle, in rear parts of the vehicle, or under seats.

An example of the vehicle according to the sixth approach is explained below, with reference to the drawings.

FIG. 12 is a cross-sectional view schematically showing an example of a vehicle according to the sixth approach.

A vehicle 200, shown in FIG. 12 includes a vehicle body 201 and a battery pack 202. The battery pack 202 may be the battery pack according to the fifth approach.

The vehicle 200, shown in FIG. 12, is a four-wheeled automobile. As the vehicle 200, for example, a two-wheeled to four-wheeled hybrid electric automobile, a two-wheeled to four-wheeled electric automobile, a power-assisted bicycle, or railway car may be used.

The vehicle 200 may include plural battery packs 202. In that case, the battery packs 202 may be connected to each other in series or in parallel. The connection may be a combination of the connection in series and the connection in parallel.

The battery pack 202 is installed in an engine compartment located at the front of the vehicle body 201. The position at which the battery pack 202 is installed is not particularly limited. The battery pack 202 may be installed in rear sections of the vehicle body 201, or under a seat. The battery pack 202 may be used as a power source of the vehicle 200. The battery pack 202 can also recover regenerative energy of motive force of the vehicle 200.

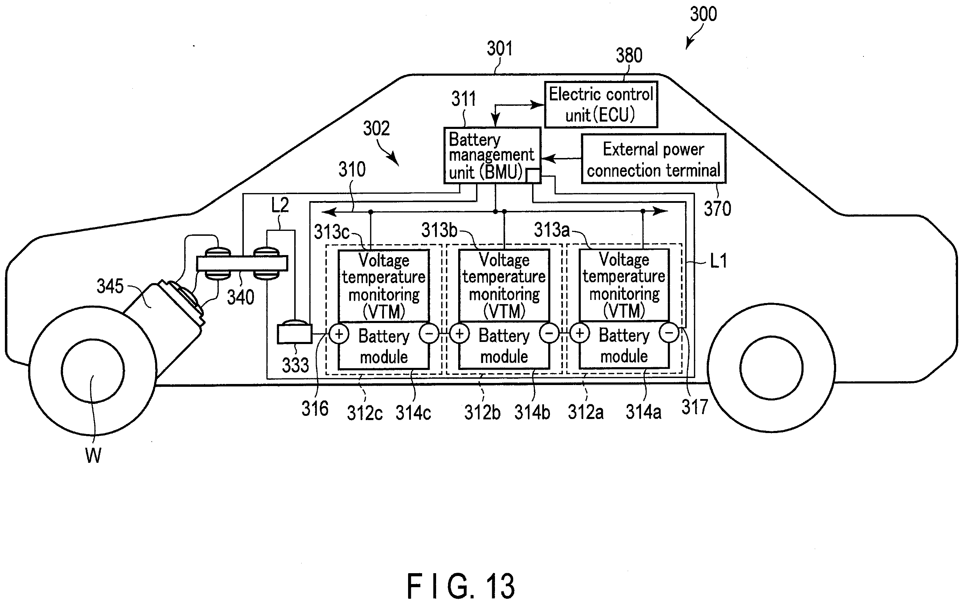

Next, with reference to FIG. 13, an aspect of operation of the vehicle according to the sixth approach is explained.

FIG. 13 is a view schematically showing another example of the vehicle according to the sixth approach. A vehicle 300, shown in FIG. 13, is an electric automobile.

The vehicle 300, shown in FIG. 13, includes a vehicle body 301, a vehicle power source 302, a vehicle ECU (electric control unit) 380, which is a master controller of the vehicle power source 302, an external terminal (an external power connection terminal) 370, an inverter 340, and a drive motor 345.

The vehicle 300 includes the vehicle power source 302, for example, in an engine compartment, in the rear sections of the automobile body, or under a seat. In FIG. 13, the position of the secondary battery installed in the vehicle 300 is schematically shown.

The vehicle power source 302 includes plural (for example, three) battery packs 312a, 312b and 312c, a battery management unit (BMU) 311, and a communication bus 310.

The three battery packs 312a, 312b and 312c are electrically connected in series. The battery pack 312a includes a battery module 314a and a battery module monitoring unit (VTM: voltage temperature monitoring) 313a. The battery pack 312b includes a battery module 314b, and a battery module monitoring unit 313b. The battery pack 312c includes a battery module 314c, and a battery module monitoring unit 313c. The battery packs 312a, 312b and 312c can each be independently removed, and may be exchanged by a different battery pack 312.

Each of the battery modules 314a to 314c includes plural single-batteries connected to each other in series. At least one of the plural single-batteries is the secondary battery according to the third approach. The battery modules 314a to 314c each perform charging and discharging through a positive electrode terminal 316 and a negative electrode terminal 317.

In order to collect information concerning security of the vehicle power source 302, the battery management unit 311 performs communication with the battery module monitoring units 313a to 313c and collects information such as voltages or temperatures of the single-batteries included in the battery modules 314a to 314c included in the vehicle power source 302.

The communication bus 310 is connected between the battery management unit 311 and the battery module monitoring units 313a to 313c. The communication bus 310 is configured so that multiple nodes (i.e., the battery management unit and one or more battery module monitoring units) share a set of communication lines. The communication bus 310 is, for example, a communication bus configured based on CAN (Control Area Network) standard.

The battery module monitoring units 313a to 313c measure a voltage and a temperature of each single-battery in the battery modules 314a to 314c based on commands communicated from the battery management unit 311. It is possible, however, to measure the temperatures only at several points per battery module, and the temperatures of all of the single-batteries need not be measured.

The vehicle power source 302 may also have an electromagnetic contactor (for example, a switch unit 333 shown in FIG. 13) for switching connection between the positive electrode terminal 316 and the negative electrode terminal 317. The switch unit 333 includes a precharge switch (not shown), which is turned on when the battery modules 314a to 314c are charged, and a main switch (not shown), which is turned on when battery output is supplied to a load. The precharge switch and the main switch include a relay circuit (not shown), which is turned on or off based on a signal provided to a coil disposed near the switch elements.

The inverter 340 converts an inputted direct current voltage to a three-phase alternate current (AC) high voltage for driving a motor. Three phase output terminal(s) of the inverter 340 is (are) connected to each three-phase input terminal of the drive motor 345. The inverter 340 controls an output voltage based on control signals from the battery management unit 311 or the vehicle ECU 380, which controls the entire operation of the vehicle.

The drive motor 345 is rotated by electric power supplied from the inverter 340. The rotation is transferred to an axle and driving wheels W via a differential gear unit, for example.

The vehicle 300 also includes a regenerative brake mechanism, though not shown. The regenerative brake mechanism rotates the drive motor 345 when the vehicle 300 is braked, and converts kinetic energy to regenerative energy, as electric energy. The regenerative energy, recovered in the regenerative brake mechanism, is inputted into the inverter 340 and converted to direct current. The direct current is inputted into the vehicle power source 302.

One terminal of a connecting line L1 is connected via a current detector (not shown) in the battery management unit 311 to the negative electrode terminal 317 of the vehicle power source 302. The other terminal of the connecting line L1 is connected to a negative electrode input terminal of the inverter 340.

One terminal of a connecting line L2 is connected through the switch unit 333 to the positive electrode terminal 316 of the vehicle power source 302. The other terminal of the connecting line L2 is connected to a positive electrode input terminal of the inverter 340.

The external terminal 370 is connected to the battery management unit 311. The external terminal 370 is able to connect, for example, to an external power source.

The vehicle ECU 380 cooperatively controls the battery management unit 311 together with other units in response to inputs operated by a driver or the like, thereby performing the management of the whole vehicle. Data concerning the security of the vehicle power source 302, such as a remaining capacity of the vehicle power source 302, are transferred between the battery management unit 311 and the vehicle ECU 380 via communication lines.

The vehicle according to the sixth approach includes the battery pack according to the fifth approach. The vehicle according to the sixth approach, therefore, is excellent in storage performance and cycle performance by virtue of including the battery pack having excellent in storage performance and cycling performance. Furthermore, since the battery pack has excellent life performance, a vehicle of high reliability can be provided.

(Seventh Approach)

According to a seventh approach, a stationary power supply is provided. The stationary power supply includes a battery pack according to the fifth approach. Note that instead of a battery pack according to the fifth approach, the stationary power supply may have a battery module according to the fourth approach or a secondary battery according to the third approach installed therein.

The stationary power supply according to the seventh approach includes the battery pack according to the fifth approach. Therefore, the stationary power supply according to the seventh approach can realize long life.

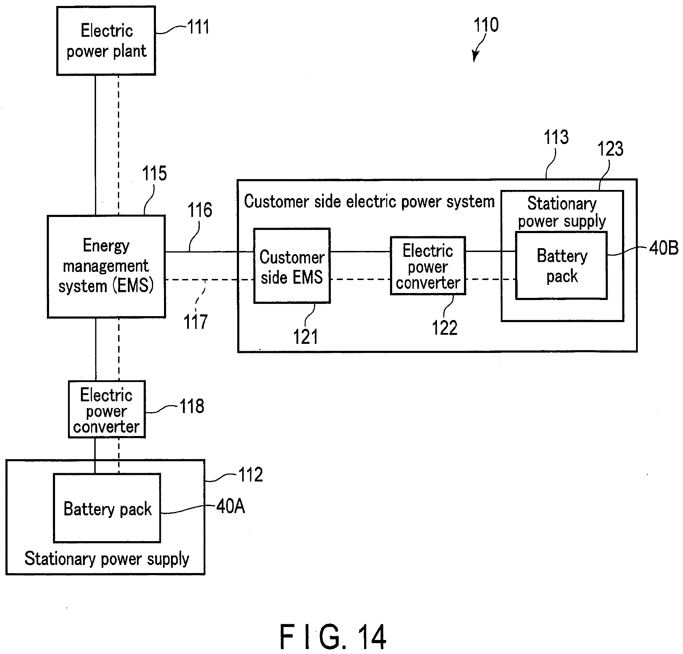

FIG. 14 is a block diagram showing an example of a system including a stationary power supply according to the seventh approach. FIG. 14 is a diagram showing an application example to stationary power supplies 112, 123 as an example of use of battery packs 40A, 40B according to the fifth approach. In the example shown in FIG. 14, a system 110 in which the stationary power supplies 112, 123 are used is shown. The system 110 includes an electric power plant 111, the stationary power supply 112, a customer side electric power system 113, and an energy management system (EMS) 115. Also, an electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 performs control to stabilize the entire system 110 by utilizing the electric power network 116 and the communication network 117.

The electric power plant 111 generates a large amount of electric power from fuel sources such as thermal power or nuclear power. Electric power is supplied from the electric power plant 111 through the electric power network 116 and the like. In addition, the battery pack 40A is installed in the stationary power supply 112. The battery pack 40A can store electric power and the like supplied from the electric power plant 111. In addition, the stationary power supply 112 can supply the electric power stored in the battery pack 40A through the electric power network 116 and the like. The system 110 is provided with an electric power converter 118. The electric power converter 118 includes a converter, an inverter, a transformer and the like. Thus, the electric power converter 118 can perform conversion between direct current (DC) and alternate current (AC), conversion between alternate currents of frequencies different from each other, voltage transformation (step-up and step-down) and the like. Therefore, the electric power converter 118 can convert electric power from the electric power plant 111 into electric power that can be stored in the battery pack 40A.

The customer side electric power system 113 includes an electric power system for factories, an electric power system for buildings, an electric power system for home use and the like. The customer side electric power system 113 includes a customer side EMS 121, an electric power converter 122, and the stationary power supply 123. The battery pack 40B is installed in the stationary power supply 123. The customer side EMS 121 performs control to stabilize the customer side electric power system 113.

Electric power from the electric power plant 111 and electric power from the battery pack 40A are supplied to the customer side electric power system 113 through the electric power network 116. The battery pack 40B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of frequencies different from each other, voltage transformation (step-up and step-down) and the like. Therefore, the electric power converter 122 can convert electric power supplied to the customer side electric power system 113 into electric power that can be stored in the battery pack 40B.

Note that the electric power stored in the battery pack 40B can be used, for example, for charging a vehicle such as an electric automobile. Also, the system 110 may be provided with a natural energy source. In such a case, the natural energy source generates electric power by natural energy such as wind power and solar light. In addition to the electric power plant 111, electric power is also supplied from the natural energy source through the electric power network 116.

Examples are explained below, but the approaches are not limited to examples described below.

(Example 1)

A secondary battery was produced by the following procedure.

<Production of Current Collector>

An aluminum foil (99% purity) having a thickness of 20 $\mu$m was immersed in a dilute sulfuric acid solution whose temperature was fixed to 0 ° C. Surface treatment was performed by flowing electricity through the aluminum foil by conducting electricity at the foil ends. The voltage at this time was 50 V, and the time was 10 minutes. After the treatment in the dilute sulfuric acid, the aluminum foil was immersed in pure water set to 30°C, thereby obtaining a current collector provided with porous layers on the aluminum foil. The porous layers were formed on both principal surfaces of the metallic layer.

<Production of Positive Electrode>

A slurry was prepared by mixing 90% by weight of $LiMn_2O_4$ composite oxide as a positive electrode active material with an average particle size of primary particles of 2 $\mu$m, 7% by weight of graphite powder as electro-conductive agent, and 3% by weight of PVdF as binder, and dispersing them in an N-methyl-2-pyrolidone (NMP) solvent. Each of the above-described mixing amount is a weight with respect to the weight of the positive electrode active material-containing layer. The slurry was applied onto both surfaces of the current collector produced as described above, and dried, thereby obtaining a stack. The stack was pressed to produce a positive electrode in which the thickness of the positive electrode layer (positive electrode active material-containing layer) of one side is 40 $\mu$m and the electrode density is 3.2 g/cm$^3$.

<Production of Negative Electrode>

Prepared were $Li_4Ti_5O_{12}$ particles having an average primary particle size of 0.6 $\mu$m and a specific surface of 10 m$^2$/g as negative electrode active material particles, graphite powder having an average particle size of 6 $\mu$m as electro-conductive agent, and PVdF as binder. The negative electrode active material particles, electro-conductive agent, and binder were mixed at a ratio of 94% by weight, 4% by weight, and 2% by weight, respectively, with respect to the entire negative electrode, and dispersed in an NMP solvent. This dispersion liquid was stirred using a ball mill under the conditions of revolution rate of 1000 rpm and stirring time of 2 hours. The resulting slurry was applied onto both surfaces of a zinc foil (99.3% purity) having a thickness of 30 $\mu$m, and the applied coat was dried, thereby obtaining a stack of a current collector and an active material-containing layer. The stack was pressed to produce a negative electrode with a negative electrode active material-containing layer having a thickness of 59 $\mu$m and an electrode density of 2.2 g/cm$^2$.

This negative electrode does not include the porous layer.

<Production of Electrode Group>

A stack was obtained by stacking the positive electrode obtained as described above, a nonwoven fabric having a thickness of 20 $\mu$m as a separator, and the negative electrode in such a manner that the active material-containing layers of the positive and negative electrodes face each other, having the separator interposed therebetween. Next, this stack was spirally wound so that the negative electrode was positioned at the outermost periphery, thereby preparing an electrode group. The electrode group was subjected to hot pressing at 90 °C, to thereby prepare a flat electrode group. The resulting electrode group was housed in a thin metallic can made of stainless steel having a thickness of 0.25 mm. This metallic can was provided with a valve for the purpose of leaking gas when the inner pressure reaches two atmospheric pressures or more.

<Production of Secondary Battery and Initial Charge and Discharge>

An electrolyte was prepared by dissolving 12 M (mol/L) of LiCl as an electrolyte salt in 1 L of water. This electrolyte was put into the above-described metallic can to prepare a secondary battery. The prepared secondary battery was left for 24 hours in an environment of 25°C. Thereafter, in an environment of 25 °C, the battery was charged at 1 A up to 2.8 V, and then discharged to 1.6 V, to examine the capacity of the battery.

<Cycle Test>

In an environment of 25°C, one charge-and-discharge cycle was set for a series of operations for charging up to 2.8 V at a contact current of 3 A, subsequently providing a resting time of 30 minutes, then discharging to 1.5 V at a contact current of 3 A, and providing another resting time of 30 minutes. This charge-and-discharge cycle was repeated 50 times for the prepared secondary battery. The capacity (Ah) with respect to the initial capacity and the charge-discharge efficiency (discharge capacity/charge capacity) at the 50th time were obtained.

<Measurement of Ratio A/R>

After the capacity (Ah) and charge-discharge efficiency (%) after the 50 cycles were measured, the secondary battery put in a complete discharged state (SOC of 0%) was disassembled in a glove box filled with argon. From the disassembled battery, the positive electrode was taken out. This electrode was washed with pure water.
The washed electrode was cut using ion milling and attached to a SEM sample table so that the cross-section could be observed. Three positions were observed.
In one SEM observation image, the porous layer was divided equally into three to set virtual regions. In each of the three virtual regions, ten positions of unit length R ($\mu$m) extending in the planar direction of the metallic layer were randomly set, and the number of pores intersecting each R was observed. In this manner, for the total of ninety positions of R in the three SEM observation images, the number of pores intersecting R was measured, and the average value A was obtained from the number N of pores intersecting each R of the ninety positions. From the average value A and the R, the ratio A/R was obtained. In Example 1, ratio A/R = 8.

<Measurement of Degree of Sealing>

The positive electrode was obtained from the secondary battery disassembled as described above. From the positive electrode, the positive electrode active material layer was peeled off to expose the surface of the porous layer. For this exposed surface, ten positions were subjected to SEM observation. The average value of the number of pores measured for the ten positions was defined as the number k1 of pores (surface pores) observable from the surface on the electrode active material layer side. Next, the surface of the porous layer of the ten positions observed as described above was milled by 100 nm by ion milling, and these specified ten positions were further subjected to SEM observation. The average value of the number of pores measured for the ten positions was defined as the number k2 of pores observable from the surface on the porous layer side, and the degree of sealing [{(k2-k1) $\times$ 100%} / k2] was obtained. In Example 1, the degree of sealing was 41%.
For Examples 2 to 34 and Comparative Examples 1 to 9 described below, the cycle life performance of the batteries of Examples 2 to 34 and Comparative Examples 1 to 9 were evaluated, charge-discharge efficiency was calculated, and the ratio A/R and the degree of sealing were measured, in the same manner as in Example 1.
Table 3 shows the species of active material used, the position and thickness of the porous layers of the current collector, the metal species and thickness of the metallic layer, the treatment time and treatment voltage of the dilute sulfuric acid treatment, and the temperature of the pure water treatment (sealing treatment) for Example 1. Table 6 shows the ratio A/R ($\mu m^{-1}$), the degree of sealing (%), the capacity after 50 cycles (Ah), and the charge-discharge efficiency (%) . Tables 3 and 4 show the species of active material, the position and thickness per side of the porous layer (s) of the current collector, the metal species and thickness of the metallic layer, the treatment time and treatment voltage of dilute sulfuric acid treatment, and the temperature of pure water treatment for Examples 2 to 34. Table 5 shows the species of active material, the position and thickness of the porous layers of the current collector, the metal species and thickness of the metallic layer, the treatment time and treatment voltage f dilute sulfuric acid treatment, and the temperature of pure water treatment for Comparative Examples 1 to 9. Tables 6 and 7 show the ratio A/R ($\mu m^{-1}$), the degree of sealing (%), the capacity after 50 cycles (Ah), and the charge-discharge efficiency (%) for Examples 2 to 34, and Table 8 shows the ratio A/R ($\mu m^{-1}$), the degree of sealing (%), the capacity after 50 cycles (Ah), and the charge-discharge efficiency (%) for Comparative Examples 1 to 9. In the case the porous layers were formed on both principal surfaces of the metallic layer, the thicknesses of the porous layers formed on the respective principal surfaces were substantially the same. That is, if the porous layers were formed on both principal surfaces, for example, in Example 1 in which the thickness of one side of the porous layer was 3 $\mu m$, the thickness of the porous layer for the current collector is 6 $\mu m$ in total. Therefore, only the thickness of one side of the porous layer is described.

(Example 2)

A secondary battery was produced by the same production method as described in Example 1, except that an alloy foil containing aluminum and silicon (Si) was used instead of the aluminum foil (99% purity).

(Examples 3 to 6)

Current collector production was performed in such a manner that current collectors having the structures shown in Tables 3 and 6 were obtained. Here, when the porous layer was prepared, the treatment time in the dilute sulfuric acid was changed to 30 minutes, 8 minutes, 5 minutes, and 20 minutes, respectively. Other than that, secondary batteries were produced by the same production method as described in Example 1.

(Example 7)

A secondary battery was produced by the same production method as described in Example 1, except that a titanium foil was used as the current collector for the positive electrode, and that the 20 $\mu m$ thick current collector described in Example 1 was used for the negative electrode.

(Example 8)

A secondary battery was produced in the same manner as in Example 7, except that titanium oxide ($TiO_2$) was used as negative electrode active material.

(Example 9)

A secondary battery was produced in the same manner as in Example 7, except that a niobium titanium composite oxide ($Nb_2TiO_7$) was used as negative electrode active material.

(Example 10)

A secondary battery was produced in the same manner as in Example 7, except that a sodium niobium titanium composite oxide ($Li_2Na_{1.8}Ti_{5.8}Nb_{0.2}O_{14}$) was used as negative electrode active material.

(Example 11)

A secondary battery was produced in the same manner as in Example 1, except that an NCM ternary positive electrode active material ($LiNi_{0.5}Co_{0.2}Mn_{0.3}O_2$) was used as positive electrode active material.

(Example 12)

A secondary battery was produced in the same manner as in Example 1, except that an NCM ternary positive electrode active material ($LiNi_{0.6}Co_{0.2}Mn_{0.2}O_2$) was used as positive electrode active material.

(Example 13)

A secondary battery was produced in the same manner as in Example 1, except that an NCM ternary positive electrode active material ($LiNi_{0.33}Co_{0.33}Mn_{0.33}O_2$) was used as positive electrode active material.

(Example 14)

A secondary battery was produced in the same manner as in Example 1, except that an NCM ternary positive electrode active material ($LiNi_{0.8}Co_{0.1}Mn_{0.1}O_2$) was used as negative electrode active material.

(Example 15)

A secondary battery was produced in the same manner as in Example 1, except that $LiNi_{0.5}Mn_{1.5}O_2$ was used as positive electrode active material.

(Example 16)

A secondary battery was produced in the same manner as in Example 1, except that $LiCoO_2$ was used as positive electrode active material.

(Example 17)

A secondary battery was produced in the same manner as in Example 1, except that $LiFePO_4$ was used as positive electrode active material.

(Examples 18 to 21)

A secondary battery was produced by the same production method as described in Example 1, except that current collectors including metallic layers having thicknesses of 8 $\mu$m to 30 $\mu$m were respectively used.

(Examples 22 to 24)

Current collector production was performed in such a manner that current collectors having the structures shown in Tables 4 and 7 were obtained. Here, when the porous layer was prepared, the treatment voltage in dilute sulfuric acid was changed to 90 V, 60 V, and 30 V, respectively. Other than that, secondary batteries were produced by the same production method as described in Example 1.

(Examples 25 to 27)

Secondary batteries were respectively produced by the same production method as described in Example 1, Example 11, and Example 14, except that the 20 $\mu$m thick current collector described in Example 1 was used for both the positive electrode and the negative electrode.

(Examples 28 to 31)

Current collector production was performed in such a manner that current collectors having the structures shown in Tables 4 and 7 were obtained. Here, when the porous layer was prepared, the treatment temperature in pure water was changed to 10°C, 20°C, 35°C, and 50°C, respectively. Other than that, secondary batteries were produced by the same production method as described in Example 1.

(Example 32)

Current collector production was performed in such a manner that a current collector having the structure shown in Tables 4 and 7 was obtained. Here, when the porous layer was prepared, the treatment temperature in pure water was changed to 90°C. Other than that, a secondary battery was produced by the same production method as described in Example 1.

(Example 33)

Current collector production was performed in such a manner that a current collector having the structure shown in Tables 4 and 7 was obtained. Here, when the porous layer was prepared, the treatment in pure water was not carried out. Other than that, a secondary battery was produced by the same production method as described in Example 1.

(Example 34)

In Example 34, a secondary battery was produced using a current collector including a porous layer on one principal surface. The production method is as follows.

<Production of Current Collector>

An aluminum foil (99% purity) having a thickness of 20 $\mu$m and having one face covered with an insulator was immersed in a dilute sulfuric acid solution whose temperature was fixed to 0°C. Surface treatment was performed by flowing electricity through the aluminum foil by conducting electricity at the foil ends. The voltage at this time was 50 V, and the time was 10 minutes. After the treatment in dilute sulfuric acid, the aluminum foil was immersed in pure water set to 30°C, thereby obtaining a current collector provided with a porous layer on one principal surface of the aluminum foil.

<Production of Positive Electrode>

A slurry was prepared by mixing 90% by weight of $LiMn_2O_4$ composite oxide as a positive electrode active material with an average particle size of primary particles of 2 $\mu$m, 7% by weight of graphite powder as electro-conductive agent, and 3% by weight of PVdF as binder, and dispersing them in an N-methyl-2-pyrolidone (NMP) solvent. Each of the above-described mixing amount is a weight with respect to the weight of the positive electrode active material-containing layer. The slurry was applied onto the one surface of the current collector produced as described above on which the porous layer is present, and dried, thereby obtaining a stack. The stack was pressed to produce a composite positive electrode in which the thickness of the positive electrode active material layer is 40 $\mu$m and the electrode density is 3.2 g/cm$^3$.

<Production of Negative Electrode>

Prepared were $Li_4Ti_5O_{12}$ particles having an average primary particle size of 0.6 $\mu$m and a specific surface of 10 m$^2$/g as negative electrode active material particles, graphite powder having an average particle size of 6 $\mu$m as electro-conductive agent, and PVdF as binder. The negative electrode active material particles, electro-conductive agent, and binder were mixed at a ratio of 94% by weight, 4% by weight, and 2% by weight, respectively, with respect to the entire negative electrode, and dispersed in an NMP solvent. This dispersion liquid was stirred using a ball mill under the conditions of revolution rate of 1000 rpm and stirring time of 2 hours. The resulting slurry was applied onto one surface of a zinc foil (99.3% purity) having a thickness of 30 $\mu$m, and the applied coat was dried, thereby obtaining a stack of a current collector and an active material-containing layer. The stack was pressed to produce a negative electrode with a negative electrode active material layer having a thickness of 59 $\mu$m and an electrode density of 2.2 g/cm$^2$. This negative electrode does not include the porous layer.

<Production of Secondary Battery>

A secondary battery was produced by the same production method as described in Example 1.

(Comparative Example 1)

A secondary battery was produced by the same production method as described in Example 1, except that an aluminum foil subjected to no surface treatment was used.

(Comparative Example 2)

Current collector production was performed in such a manner that a current collector having the structure shown in Tables 5 and 8 was obtained. Here, when the porous layer of the current collector was prepared, the treatment voltage in dilute sulfuric acid was changed to 10 V. Other than that, a secondary battery was produced by the same production method as described in Example 1.

(Comparative Example 3)

Current collector production was performed in such a manner that a current collector having the structure shown in Tables 5 and 8 was obtained. Here, when the porous layer of the current collector was prepared, the treatment voltage in dilute sulfuric acid was changed to 100 V. Other than that, a secondary battery was produced by the same production method as described in Example 1.

(Comparative Example 4)

A secondary battery was produced by the same production method as described in Example 1, except that as current collector, a titanium foil was used for the positive electrode, and the 20 $\mu$m thick current collector described in Comparative Example 2 was used for the negative electrode.

(Comparative Example 5)

A secondary battery was produced by the same production method as described in Example 1, except that as current collector, a titanium foil was used for the positive electrode, and the 20 $\mu$m thick current collector described in Comparative Example 3 was used for the negative electrode.

(Comparative Example 6)

A secondary battery was produced by the same production method as described in Example 1, except that the 20 $\mu$m thick current collector described in Comparative Example 2 was used for both the positive electrode and the negative electrode.

(Comparative Example 7)

A secondary battery was produced by the same production method as described in Example 1, except that the 20 $\mu$m thick current collector described in Comparative Example 3 was used for both the positive electrode and the negative electrode.

(Comparative Example 8)

Current collector production was performed in such a manner that a current collector having the structure shown in Tables 5 and 8 was obtained. Here, when the porous layer was prepared, the treatment time in dilute sulfuric acid was changed to 1 minute. Other than that, a secondary battery was produced by the same production method as described in Example 1.

(Comparative Example 9)

Current collector production was performed in such a manner that a current collector having the structure shown in Tables 5 and 8 was obtained. Here, when the porous layer was prepared, the treatment time in dilute sulfuric acid was changed to 60 minutes . Other than that, a secondary battery was produced by the same production method as described in Example 1.

[Table 3]

| | Active Material Layer | |
| --- | --- | --- |
| | Positive Electrode | Negative Electrode |
| Example 1 | $LiMn_2O_4$ | $Li_4Ti_5O_{12}$ |
| Example 2 | $LiMn_2O_4$ | $Li_4Ti_5O_{12}$ |
| Example 3 | $LiMn_2O_4$ | $Li_4Ti_5O_{12}$ |
| Example 4 | $LiMn_2O_4$ | $Li_4Ti_5O_{12}$ |
| Example 5 | $LiMn_2O_4$ | $Li_4Ti_5O_{12}$ |
| Example 6 | $LiMn_2O_4$ | $Li_4Ti_5O_{12}$ |

(continued)

| | Active Material Layer | |
| | Positive Electrode | Negative Electrode |
|---|---|---|
| Example 7 | $LiMn_2O_4$ | $Li_4Ti_5O_{12}$ |
| Example 8 | $LiMn_2O_4$ | $TiO_2$ |
| Example 9 | $LiMn_2O_4$ | $Nb_2TiO_7$ |
| Example 10 | $LiMn_2O_4$ | $Li_2Na_{1.8}Ti_{5.8}Nb_{0.2}O_{14}$ |
| Example 11 | $LiNi_{0.5}Co_{0.2}Mn_{0.3}O_2$ | $Li_4Ti_5O_{12}$ |
| Example 12 | $LiNi_{0.6}Co_{0.2}Mn_{0.2}O_2$ | $Li_4Ti_5O_{12}$ |
| Example 13 | $LiNi_{0.33}Co_{0.33}Mn_{0.33}O_2$ | $Li_4Ti_5O_{12}$ |
| Example 14 | $LiNi_{0.8}Co_{0.1}Mn_{0.1}O_2$ | $Li_4Ti_5O_{12}$ |
| Example 15 | $LiNi_{0.5}Mn_{1.5}O_2$ | $Li_4Ti_5O_{12}$ |
| Example 16 | $LiCoO_2$ | $Li_4Ti_5O_{12}$ |
| Example 17 | $LiFePO_4$ | $Li_4Ti_5O_{12}$ |
| Example 18 | $LiMn_2O_4$ | $Li_4Ti_5O_{12}$ |
| Example 19 | $LiMn_2O_4$ | $Li_4Ti_5O_{12}$ |
| Example 20 | $LiMn_2O_4$ | $Li_4Ti_5O_{12}$ |

| | Current Collector | | | |
| | Porous Layer | | Metallic Layer | |
| | Position | Thickness per Side ($\mu$m) | Metal Species | Thickness ($\mu$m) |
|---|---|---|---|---|
| Example 1 | Surfaces at Positive Electrode-side | 3 | Al | 14 |
| Example 2 | Surfaces at Positive Electrode-side | 3 | Alloy containing Al and Si | 14 |
| Example 3 | Surfaces at Positive Electrode-side | 15 | Al | 14 |
| Example 4 | Surfaces at Positive Electrode-side | 1 | Al | 14 |
| Example 5 | Surfaces at Positive Electrode-side | 0.5 | Al | 14 |
| Example 6 | Surfaces at Positive Electrode-side | 10 | Al | 14 |
| Example 7 | Surfaces at Negative Electrode-side | 3 | Al | 14 |
| Example 8 | Surfaces at Negative Electrode-side | 3 | Al | 14 |
| Example 9 | Surfaces at Negative Electrode-side | 3 | Al | 14 |
| Example 10 | Surfaces at Negative Electrode-side | 3 | Al | 14 |
| Example 11 | Surfaces at Positive Electrode-side | 3 | Al | 14 |

(continued)

| | | Current Collector | | | |
|---|---|---|---|---|---|
| | | Porous Layer | | Metallic Layer | |
| | | Position | Thickness per Side (μm) | Metal Species | Thickness (μm) |
| | Example 12 | Surfaces at Positive Electrode-side | 3 | Al | 14 |
| | Example 13 | Surfaces at Positive Electrode-side | 3 | Al | 14 |
| | Example 14 | Surfaces at Positive Electrode-side | 3 | Al | 14 |
| | Example 15 | Surfaces at Positive Electrode-side | 3 | Al | 14 |
| | Example 16 | Surfaces at Positive Electrode-side | 3 | Al | 14 |
| | Example 17 | Surfaces at Positive Electrode-side | 3 | Al | 14 |
| | Example 18 | Surfaces at Positive Electrode-side | 3 | Al | 8 |
| | Example 19 | Surfaces at Positive Electrode-side | 3 | Al | 10 |
| | Example 20 | Surfaces at Positive Electrode-side | 3 | Al | 20 |

| | | Production of Current Collector | | |
|---|---|---|---|---|
| | | Dilute Sulfuric Acid Treatment | | Pure Water Treatment |
| | | Treatment Time (minutes) | Treatment Voltage (V) | Temperature (°C) |
| | Example 1 | 10 | 50 | 30 |
| | Example 2 | 10 | 50 | 30 |
| | Example 3 | 30 | 50 | 30 |
| | Example 4 | 8 | 50 | 30 |
| | Example 5 | 5 | 50 | 30 |
| | Example 6 | 20 | 50 | 30 |
| | Example 7 | 10 | 50 | 30 |
| | Example 8 | 10 | 50 | 30 |
| | Example 9 | 10 | 50 | 30 |
| | Example 10 | 10 | 50 | 30 |
| | Example 11 | 10 | 50 | 30 |
| | Example 12 | 10 | 50 | 30 |
| | Example 13 | 10 | 50 | 30 |
| | Example 14 | 10 | 50 | 30 |
| | Example 15 | 10 | 50 | 30 |
| | Example 16 | 10 | 50 | 30 |

(continued)

| | Production of Current Collector | | |
| --- | --- | --- | --- |
| | Dilute Sulfuric Acid Treatment | | Pure Water Treatment |
| | Treatment Time (minutes) | Treatment Voltage (V) | Temperature (°C) |
| Example 17 | 10 | 50 | 30 |
| Example 18 | 10 | 50 | 30 |
| Example 19 | 10 | 50 | 30 |
| Example 20 | 10 | 50 | 30 |

[Table 4]

| | Active Material Layer | |
| --- | --- | --- |
| | Positive Electrode | Negative Electrode |
| Example 21 | $LiMn_2O_4$ | $Li_4Ti_5O_{12}$ |
| Example 22 | $LiMn_2O_4$ | $Li_4Ti_5O_{12}$ |
| Example 23 | $LiMn_2O_4$ | $Li_4Ti_5O_{12}$ |
| Example 24 | $LiMn_2O_4$ | $Li_4Ti_5O_{12}$ |
| Example 25 | $LiMn_2O_4$ | $Li_4Ti_5O_{12}$ |
| Example 26 | $LiNi_{0.5}Co_{0.2}Mn_{0.3}O_2$ | $Li_4Ti_5O_{12}$ |
| Example 27 | $LiNi_{0.8}Co_{0.1}Mn_{0.1}O_2$ | $Li_4Ti_5O_{12}$ |
| Example 28 | $LiMn_2O_4$ | $Li_4Ti_5O_{12}$ |
| Example 29 | $LiMn_2O_4$ | $Li_4Ti_5O_{12}$ |
| Example 30 | $LiMn_2O_4$ | $Li_4Ti_5O_{12}$ |
| Example 31 | $LiMn_2O_4$ | $Li_4Ti_5O_{12}$ |
| Example 32 | $LiMn_2O_4$ | $Li_4Ti_5O_{12}$ |
| Example 33 | $LiMn_2O_4$ | $Li_4Ti_5O_{12}$ |
| Example 34 | $LiMn_2O_4$ | $Li_4Ti_5O_{12}$ |

| | Current Collector | | | |
| --- | --- | --- | --- | --- |
| | Porous Layer | | Metallic Layer | |
| | Position | Thickness per Side ($\mu$m) | Metal Species | Thickness ($\mu$m) |
| Example 21 | Surfaces at Positive Electrode-side | 3 | Al | 30 |
| Example 22 | Surfaces at Positive Electrode-side | 3 | Al | 14 |
| Example 23 | Surfaces at Positive Electrode-side | 3 | Al | 14 |
| Example 24 | Surfaces at Positive Electrode-side | 3 | Al | 14 |
| Example 25 | Surfaces at Both Electrode-sides | 3 | Al | 14 |
| Example 26 | Surfaces at Both Electrode-sides | 3 | Al | 14 |
| Example 27 | Surfaces at Both Electrode-sides | 3 | Al | 14 |
| Example 28 | Surfaces at Positive Electrode-side | 3 | Al | 14 |
| Example 29 | Surfaces at Positive Electrode-side | 3 | Al | 14 |
| Example 30 | Surfaces at Positive Electrode-side | 3 | Al | 14 |

(continued)

| | | Current Collector | | | |
|---|---|---|---|---|---|
| | | Porous Layer | | Metallic Layer | |
| | | Position | Thickness per Side (μm) | Metal Species | Thickness (μm) |
| Example 31 | | Surfaces at Positive Electrode-side | 3 | Al | 14 |
| Example 32 | | Surfaces at Positive Electrode-side | 3 | Al | 14 |
| Example 33 | | Surfaces at Positive Electrode-side | 3 | Al | 14 |
| Example 34 | | Surface at Positive Electrode-side | 3 | Al | 14 |

| | Production of Current Collector | | |
|---|---|---|---|
| | Dilute Sulfuric Acid Treatment | | Pure Water Treatment |
| | Treatment Time (minutes) | Treatment Voltage (V) | Temperature (°C) |
| Example 21 | 10 | 50 | 30 |
| Example 22 | 10 | 90 | 30 |
| Example 23 | 10 | 60 | 30 |
| Example 24 | 10 | 30 | 30 |
| Example 25 | 10 | 50 | 30 |
| Example 26 | 10 | 50 | 30 |
| Example 27 | 10 | 50 | 30 |
| Example 28 | 10 | 50 | 10 |
| Example 29 | 10 | 50 | 20 |
| Example 30 | 10 | 50 | 35 |
| Example 31 | 10 | 50 | 50 |
| Example 32 | 10 | 50 | 90 |
| Example 33 | 10 | - | - |
| Example 34 | 10 | 50 | 30 |

[Table 5]

| | | Active Material Layer | |
|---|---|---|---|
| | | Positive Electrode | Negative Electrode |
| Comparative Example 1 | | $LiMn_2O_4$ | $Li_4Ti_5O_{12}$ |
| Comparative Example 2 | | $LiMn_2O_4$ | $Li_4Ti_5O_{12}$ |
| Comparative Example 3 | | $LiMn_2O_4$ | $Li_4Ti_5O_{12}$ |
| Comparative Example 4 | | $LiMn_2O_4$ | $Li_4Ti_5O_{12}$ |
| Comparative Example 5 | | $LiMn_2O_4$ | $Li_4Ti_5O_{12}$ |
| Comparative Example 6 | | $LiMn_2O_4$ | $Li_4Ti_5O_{12}$ |

(continued)

| | Active Material Layer | |
|---|---|---|
| | Positive Electrode | Negative Electrode |
| Comparative Example 7 | LiMn$_2$O$_4$ | Li$_4$Ti$_5$O$_{12}$ |
| Comparative Example 8 | LiMn$_2$O$_4$ | Li$_4$Ti$_5$O$_{12}$ |
| Comparative Example 9 | LiMn$_2$O$_4$ | Li$_4$Ti$_5$O$_{12}$ |

| | Current Collector | | | |
|---|---|---|---|---|
| | Porous Layer | | Metallic Layer | |
| | Position | Thickness per Side (μm) | Metal Species | Thickness (μm) |
| Comparative Example 1 | nowhere | - | Al | 20 |
| Comparative Example 2 | Surfaces at Positive Electrode-side | 3 | Al | 14 |
| Comparative Example 3 | Surfaces at Positive Electrode-side | 3 | Al | 14 |
| Comparative Example 4 | Surfaces at Negative Electrode-side | 3 | Al | 14 |
| Comparative Example 5 | Surfaces at Negative Electrode-side | 3 | Al | 14 |
| Comparative Example 6 | Surfaces at Both Electrode-sides | 3 | Al | 14 |
| Comparative Example 7 | Surfaces at Both Electrode-sides | 3 | Al | 14 |
| Comparative Example 8 | Surfaces at Both Electrode-sides | 0.1 | Al | 14 |
| Comparative Example 9 | Surfaces at Both Electrode-sides | 30 | Al | 15 |

| | Production of Current Collector | | |
|---|---|---|---|
| | Dilute Sulfuric Acid Treatment | | Pure Water Treatment |
| | Treatment Time (minutes) | Treatment Voltage (V) | Temperature (°C) |
| Comparative Example 1 | - | - | - |
| Comparative Example 2 | 10 | 10 | 30 |
| Comparative Example 3 | 10 | 100 | 30 |
| Comparative Example 4 | 10 | 10 | 30 |
| Comparative Example 5 | 10 | 100 | 30 |

(continued)

| | Production of Current Collector | | |
|---|---|---|---|
| | Dilute Sulfuric Acid Treatment | | Pure Water Treatment |
| | Treatment Time (minutes) | Treatment Voltage (V) | Temperature (°C) |
| Comparative Example 6 | 10 | 10 | 30 |
| Comparative Example 7 | 10 | 100 | 30 |
| Comparative Example 8 | 1 | 50 | 30 |
| Comparative Example 9 | 60 | 50 | 30 |

[Table 6]

| | A/R ($\mu$m$^{-1}$) | Degree of Sealing (%) | Capacity after 50 Cycles (Ah) | Charge-discharge Efficiency (%) |
|---|---|---|---|---|
| Example 1 | 8 | 41 | 2.8 | 95 |
| Example 2 | 6 | 61 | 2.7 | 96 |
| Example 3 | 9 | 42 | 2.9 | 95 |
| Example 4 | 7 | 44 | 2.9 | 92 |
| Example 5 | 7 | 42 | 2.8 | 88 |
| Example 6 | 8 | 48 | 2.7 | 96 |
| Example 7 | 10 | 45 | 2.9 | 95 |
| Example 8 | 9 | 40 | 2.9 | 94 |
| Example 9 | 6 | 55 | 2.9 | 94 |
| Example 10 | 8 | 44 | 2.8 | 93 |
| Example 11 | 9 | 42 | 2.8 | 93 |
| Example 12 | 9 | 48 | 2.7 | 96 |
| Example 13 | 10 | 59 | 2.9 | 93 |
| Example 14 | 11 | 40 | 2.9 | 94 |
| Example 15 | 6 | 51 | 2.8 | 96 |
| Example 16 | 8 | 42 | 2.8 | 95 |
| Example 17 | 7 | 53 | 2.8 | 94 |
| Example 18 | 8 | 42 | 2.7 | 94 |
| Example 19 | 7 | 48 | 2.9 | 95 |
| Example 20 | 10 | 42 | 2.9 | 94 |

[Table 7]

| | A/R ($\mu$m$^{-1}$) | Degree of Sealing (%) | Capacity after 50 Cycles (Ah) | Charge-discharge Efficiency (%) |
|---|---|---|---|---|
| Example 21 | 7 | 48 | 2.8 | 94 |
| Example 22 | 1 | 45 | 2.9 | 92 |

(continued)

|  | A/R ($\mu m^{-1}$) | Degree of Sealing (%) | Capacity after 50 Cycles (Ah) | Charge-discharge Efficiency (%) |
|---|---|---|---|---|
| Example 23 | 20 | 40 | 2.8 | 96 |
| Example 24 | 50 | 55 | 2.8 | 93 |
| Example 25 | 6 | 48 | 2.9 | 94 |
| Example 26 | 8 | 59 | 2.8 | 95 |
| Example 27 | 7 | 40 | 2.9 | 95 |
| Example 28 | 10 | 20 | 2.9 | 93 |
| Example 29 | 11 | 40 | 2.8 | 96 |
| Example 30 | 6 | 60 | 2.8 | 95 |
| Example 31 | 8 | 80 | 2.9 | 92 |
| Example 32 | 7 | 100 | 2.8 | 80 |
| Example 33 | 8 | 0 | 2.9 | 83 |
| Example 34 | 8 | 41 | 2.7 | 93 |

[Table 8]

|  | A/R ($\mu m^{-1}$) | Degree of Sealing (%) | Capacity after 50 Cycles (Ah) | Charge-discharge Efficiency (%) |
|---|---|---|---|---|
| Comparative Example 1 | - | - | 0.1 | 20 |
| Comparative Example 2 | 0.6 | 45 | 0.4 | 30 |
| Comparative Example 3 | 62 | 40 | 0.3 | 40 |
| Comparative Example 4 | 0.6 | 55 | 0.1 | 20 |
| Comparative Example 5 | 59 | 44 | 0.3 | 32 |
| Comparative Example 6 | 0.8 | 42 | 1.2 | 70 |
| Comparative Example 7 | 65 | 40 | 1.5 | 75 |
| Comparative Example 8 | 65 | 55 | 0.2 | 25 |
| Comparative Example 9 | 65 | 44 | 0.5 | 50 |

The comparison of Examples 1 to 33 with Comparative Examples 1 to 9 indicates that when the electrode current collector satisfies $1 \le A/R \le 50$, it is possible to realize excellent capacity after 50 cycles and charge-discharge efficiency. Furthermore, the comparison of Examples 1 to 31 with Examples 32 and 33 indicates that it is further preferable that the degree of sealing be 20% or more and 80% or less.

According to at least one approach and example described above, an electrode current collector is provided. The electrode current collector contains aluminum, and the electrode current collector includes a metallic layer, and a porous layer on one principal surface of the metallic layer. The porous layer includes plural pores extending in a thickness direction of the porous layer. When virtual regions obtained by equally dividing the porous layer into three in the thickness direction of the porous layer are set with respect to an observation image of a cross-section of the electrode current collector as observed by a scanning electron microscope, ten positions of unit length R extending in a planar direction of the metallic layer are set in each of the virtual regions, and a number N of the pores intersecting the R is measured for each R, a ratio between an average value A of the number N of the pores and the R is $1 \leq A/R \leq 50$. The electrode current collector can maintain electronic conduction paths while suppressing gas generation. Therefore, for a secondary battery with an electrode including the electrode current collector, there can be provided a secondary battery excellent in charge-discharge performance and cycle life performance.

The present disclosure also encompasses the following approaches of electrode current collectors, electrodes, secondary batteries, and the like:

1. An electrode current collector containing aluminum, the electrode current collector comprising:

a metallic layer; and
a porous layer on one principal surface or both principal surfaces of the metallic layer,
the porous layer comprising plural pores extending in a thickness direction of the porous layer, and
when ten positions of unit length R ($\mu$m) extending in a planar direction of the metallic layer are set in a cross-section of the electrode current collector, a ratio between the R and an average value A of a number N per R of the pores intersecting the R is $1 \leq A/R \leq 50$.

2. The electrode current collector according to clause 1, wherein the ratio A/R is $2 \leq A/R \leq 40$.
3. The electrode current collector according to clause 1 or 2, wherein a degree of sealing (($k2$-$k1$) $\times$ 100 / $k2$), which is a value of number $k1$ of pores observed from a first surface of the porous layer that is opposite from the metallic layer with respect to number $k2$ of pores observed from a second surface of the porous layer obtained by removing from the first surface to a predetermined depth, is 20% or more and 80% or less.
4. The electrode current collector according to any one of clauses 1 to 3, wherein a ratio ($t/T$) of thickness t of the porous layer and thickness T of the metallic layer is $0.02 \leq t/T \leq 1.1$.
5. An electrode, comprising:

an electrode active material layer; and
the electrode current collector according to any one of clauses 1 to 4,
the porous layer being disposed between the electrode active material layer and the metallic layer.

6. A secondary battery comprising:

a positive electrode;
a negative electrode; and
an electrolyte,
the positive electrode or the negative electrode comprising the electrode according to clause 5.

7. The secondary battery according to clause 6, wherein the negative electrode comprises a negative electrode active material, and the negative electrode active material comprises at least one selected from the group consisting of an oxide of titanium, lithium titanium oxide, and lithium titanium composite oxide.
8. A battery pack comprising the secondary battery according to clause 6 or 7.
9. The battery pack according to clause 8, further comprising an external power distribution terminal and a protective circuit.
10. The battery pack according to clause 8 or 9, comprising plural of the secondary batteries, the secondary batteries being electrically connected in series, in parallel, or in combination of in-series connection and in-parallel connection.
11. A vehicle comprising the battery pack according to any one of clauses 8 to 10.
12. The vehicle according to clause 11, wherein the battery pack is configured to recover a regenerative energy of power of the vehicle.
13. The vehicle according to clause 11 or 12, which comprises a mechanism configured to convert kinetic energy of the vehicle into regenerative energy.
14. A stationary power supply comprising the battery pack according to any one of clauses 8 to 10.

While certain approaches have been described, these approaches have been presented by way of example only, and are not intended to limit the scope of the claims. Indeed, the electrode current collector, electrode, secondary battery, battery pack, vehicle, and stationary power supply described herein may be embodied in a variety of other forms ; furthermore, various omissions, substitutions and changes in the form of the apparatuses described herein may be made.

**Claims**

1. An electrode current collector (60) containing aluminum, the electrode current collector (60) comprising:

   a metallic layer (61); and
   a porous layer (62) on one principal surface or both principal surfaces of the metallic layer (61),
   the porous layer (62) comprising plural pores (63) extending in a thickness direction of the porous layer (62), and
   when ten positions of unit length R ($\mu$m) extending in a planar direction of the metallic layer (61) are set in a cross-section of the electrode current collector (60), a ratio between the R and an average value A of a number N per R of the pores (63) intersecting the R is $1 \leq A/R \leq 50$.

2. The electrode current collector (60) according to claim 1, wherein the ratio A/R is $2 \leq A/R \leq 40$.

3. The electrode current collector (60) according to claim 1 or 2, wherein a degree of sealing ($(k2-k1) \times 100 / k2$), which is a value of number $k1$ of pores (63) observed from a first surface of the porous layer (62) that is opposite from the metallic layer (61) with respect to number $k2$ of pores (62) observed from a second surface of the porous layer (62) obtained by removing from the first surface to a predetermined depth, is 20% or more and 80% or less.

4. The electrode current collector (60) according to any one of claims 1 to 3, wherein a ratio (t/T) of thickness t of the porous layer (62) and thickness T of the metallic layer (61) is $0.02 \leq t/T \leq 1.1$.

5. An electrode, comprising:

   an electrode active material layer (64); and
   the electrode current collector (60) according to any one of claims 1 to 4,
   the porous layer (62) being disposed between the electrode active material layer (64) and the metallic layer (61).

6. A secondary battery comprising:

   a positive electrode (3);
   a negative electrode (4); and
   an electrolyte,
   the positive electrode (3) or the negative electrode (4) comprising the electrode according to claim 5.

7. The secondary battery according to claim 6, wherein the negative electrode (4) comprises a negative electrode active material, and the negative electrode active material comprises at least one selected from the group consisting of an oxide of titanium, lithium titanium oxide, and lithium titanium composite oxide.

8. A battery pack (40) comprising the secondary battery (43, 51) according to claim 6 or 7.

9. The battery pack (40) according to claim 8, further comprising an external power distribution terminal (59) and a protective circuit (58).

10. The battery pack (40) according to claim 8 or 9, comprising plural of the secondary batteries (43, 51), the secondary batteries (43, 51) being electrically connected in series, in parallel, or in combination of in-series connection and in-parallel connection.

11. A vehicle (200, 300) comprising the battery pack (202, 312) according to any one of claims 8 to 10.

12. The vehicle (200, 300) according to claim 11, wherein the battery pack (202, 312) is configured to recover a regenerative energy of power of the vehicle (200, 300).

13. The vehicle (200, 300) according to claim 11 or 12, which comprises a mechanism configured to convert kinetic energy of the vehicle (200, 300) into regenerative energy.

**14.** A stationary power supply (112, 123) comprising the battery pack (40A, 40B) according to any one of claims 8 to 10.

F I G. 1A

F I G. 1B

Unit length R($\mu$m)  63  62

62a
62b
62c

61

FIG. 2

EP 3 883 022 A1

F I G. 3A

F I G. 3B

40

F I G. 4

F I G. 5

F I G. 6

FIG. 7

F I G. 8

F I G. 9

44

F I G. 10

F I G. 11

F I G. 12

FIG. 13

EP 3 883 022 A1

Electric
power plant — 111

110

113   123

115

116   Customer side electric power system   Stationary
power supply

Energy
management
system (EMS)

Customer
side EMS

Electric
power
converter

Battery
pack — 40B

117

121   122

Electric
power
converter — 118

Battery pack — 112
40A

Stationary power supply

F I G. 14

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GNANAMUTHU RM ET AL: "Fabrication of anodized Li[Ni1/3Co1/3Mn1/3]O2 as cathode to enhanced the capacities for energy storage and conversion device", JOURNAL OF ALLOYS AND COMPOUNDS, ELSEVIER SEQUOIA, LAUSANNE, CH, vol. 708, 11 January 2017 (2017-01-11), pages 932-937, XP029969652, ISSN: 0925-8388, DOI: 10.1016/J.JALLCOM.2017.01.076 * p. 933: "2. Experimental" * | 1-14 | INV. H01M4/46 |
| X | WEN S ET AL: "Improved electrochemical capacitive characteristics of the carbon nanotubes grown on the alumina templates with high pore density", JOURNAL OF POWER SOURCES, ELSEVIER SA, CH, vol. 163, no. 1, 7 December 2006 (2006-12-07), pages 304-308, XP027938471, ISSN: 0378-7753 [retrieved on 2006-12-07] * abstract * | 1-14 | |
| X | CN 108 417 843 A (UNIV TIANJIN) 17 August 2018 (2018-08-17) * claims 1-6 * | 1-14 | TECHNICAL FIELDS SEARCHED (IPC) H01M |
| X | CN 107 394 209 A (ZHENGZHOU BAK BATTERY CO LTD) 24 November 2017 (2017-11-24) * paragraph [0026] - paragraph [0031] * | 1-14 | |
| X | CN 107 017 383 B (LIU XIAO) 15 November 2019 (2019-11-15) * claims 1-8 * | 1-14 | |

-/--

The present search report has been drawn up for all claims

| Place of search | Date of completion of the search | Examiner |
|---|---|---|
| Munich | 5 February 2021 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 20 19 3586

## DOCUMENTS CONSIDERED TO BE RELEVANT

| Category | Citation of document with indication, where appropriate, of relevant passages | Relevant to claim |
|---|---|---|
| T | "Why Magnification is Irrelevant in Modern Scanning Electron Microscopes Application Note Introduction", , 5 July 2011 (2011-07-05), XP055222489, Retrieved from the Internet: URL:http://www.toyo.co.jp/files/user/img/product/microscopy/pdf/5990-8594EN.pdf [retrieved on 2015-10-21] * p. 4f: "Pixel Resolution" with fig. 8-13 * | |

----- 

CLASSIFICATION OF THE APPLICATION  (IPC)

TECHNICAL FIELDS SEARCHED      (IPC)

The present search report has been drawn up for all claims

| Place of search | Date of completion of the search | Examiner |
|---|---|---|
| Munich | 5 February 2021 | Radeck, Stephanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 3586

This annex lists the patent family members relating to the patent documents cited in  the above-mentioned European search report.
The members are as contained in the European Patent Office EDP file on
The European Patent Office is in no way liable for these particulars which are merely given for the purpose of information.

05-02-2021

| Patent document cited in search report | | Publication date | Patent family member(s) | Publication date |
|---|---|---|---|---|
| CN 108417843 | A | 17-08-2018 | NONE | |
| CN 107394209 | A | 24-11-2017 | NONE | |
| CN 107017383 | B | 15-11-2019 | NONE | |

EPO FORM P0459

For more details about this annex : see Official Journal of the European Patent Office, No. 12/82